# EUROPEAN PATENT SPECIFICATION

(11) **EP 2 902 456 B1**
(45) Date of publication and mention of the grant of the patent: **21.10.2020**
(21) Application number: 13841288.7
(22) Date of filing: 27.09.2013
(51) Int. Cl.: C09D 11/00, B41J 2/01, B41M 5/00, C07F 9/32, C07F 9/53, C07F 9/50, C07F 9/655, C07F 9/40, C09D 11/101, C09D 11/38

(54) **INK COMPOSITION, INK JET RECORDING METHOD, PRINTED MATERIAL, BISACYL PHOSPHINE OXIDE COMPOUND, AND MONOACYL PHOSPHINE OXIDE COMPOUND**
TINTENZUSAMMENSETZUNG, TINTENSTRAHLAUFZEICHNUNGSVERFAHREN, BEDRUCKTES MATERIAL, BISACYLPHOSPHINOXIDVERBINDUNG UND MONOACYLPHOSPHINOXIDVERBINDUNG
COMPOSITION D'ENCRE, PROCÉDÉ D'ENREGISTREMENT À JET D'ENCRE, OBJET IMPRIMÉ, COMPOSÉ OXYDE DE BISACYLPHOSPHINE, ET COMPOSÉ OXYDE DE MONOACYLPHOSPHINE

(30) Priority: 27.09.2012 JP 2012215217; 27.09.2012 JP 2012215218
(43) Date of publication of application: 05.08.2015
(73) Proprietor: FUJIFILM Corporation, Tokyo 106-8620 (JP)
(72) Inventor: FUKAGAWA Reiko, Ashigarakami-gun Kanagawa 258-8577 (JP)
(74) Representative: Klunker IP Patentanwälte PartG mbB
(86) International application number: PCT/JP2013/076206
(87) International publication number: WO 2014/051026

(56) References cited:
- EP-A1- 1 749 513
- EP-A1- 2 065 362
- WO-A1-2011/003772
- CN-A- 102 241 792
- GB-A- 2 310 855
- JP-A- 2007 039 453
- JP-A- 2007 506 550
- JP-A- 2008 520 623
- JP-A- 2012 046 456
- JP-A- 2012 046 456
- JP-A- 2012 513 998
- US-A1- 2010 168 359
- JACQUELINE H. DE GROOT ET AL: "Hydrophilic Polymeric Acylphospine Oxide Photoinitiators/Crosslinkers for in Vivo Blue-Light Photopolymerization", BIOMACROMOLECULES, vol. 2, no. 4, 2001, pages 1271-1278, XP055240026, US ISSN: 1525-7797, DOI: 10.1021/bm015584r
- DATABASE CA [Online] CHEMICAL ABSTRACTS SERVICE, COLUMBUS, OHIO, US; 2005, CHO, CHANG HO ET AL: "Radical cyclizations of alkenyl acylphosphonate derivatives under thermal and photochemical conditions", XP002760461, retrieved from STN Database accession no. 2005:1053072
- JACQUELINE H. DE GROOT ET AL. BIOMACROMOLECULES vol. 2, 2001, pages 1271 - 1278, XP055240026

## Description

The present invention relates to an ink composition, an inkjet recording method, a printed material, a bisacylphosphine oxide compound, and a monoacylphosphine oxide compound.

### Background Art

In recent years, as an image recording method for forming an image on a recording medium based on an image data signal, the inkjet recording method has been receiving attention. The inkjet recording method has the advantages that there is less noise and a very vivid image can be recorded with low running costs by firing very small droplets.

In particular, with regard to an ink composition for inkjet recording that can be cured by irradiation with radiation such as UV (radiation-curable ink composition for inkjet recording), since the majority of the components of the ink composition are cured by irradiation with radiation such as UV, it is excellent in terms of drying properties compared with a solvent-based ink composition, and it is an excellent method since printing is possible on various types of recording media due to an image being resistant to spreading.

Examples of conventional inkjet ink compositions include those described in published Japanese translation 2011-500932 of a PCT application.

Furthermore, examples of conventional bisacylphosphine oxide compounds include compounds described in JP-A-2007-39453 (JP-A denotes a Japanese unexamined patent application publication) or US Pat Laid-open No. 2012/0142805.

Moreover, examples of conventional monoacylphosphine oxide compounds include compounds described in published Japanese translation 2012-513998 of a PCT application or JP-A-2012-46456.
EP 2 065 362 A1 relates to new intermediates for the preparation of (meth)acrylated photoinitiators and to a method for the preparation of (meth)acrylated photoinitiators. GB 2 310 855 A relates to alkylphenylbisacylphosphine oxides and to specific mixtures of bisacylphosphine oxide compounds with other photoinitiators. Jaqueline H. Groote et al: "Hydrophilic Polymeric Acylphosphine Oxide Photoinitiators/Crosslinkers for in Vivo Blue-Light Photopolymerization", Biomacromolecules, vol. 2, no. 4, 2001, pages 1271-1278 teaches blending an acyl phosphine oxide compound with another polymerizable compound. EP 1 749 513 A1 describes a photopolymerisable dental material with bisacylphosphine oxides as initiator. Chemical Abstracts service, Columbus, Ohio, Us; 2005, Cho, Chang Ho et al: "Radical cyclization of alkenyl acylphosphonate derivatives under thermal and photochemical conditions" teaches monoacyl phosphine oxides and monoacyl phosphonates. JP 2012 046456 A teaches a new acylphosphine oxide compound capable of imparting high adhesiveness to dentine to a composition, when being combined with a polymerizable monomer to form the composition, and imparting stable adhesiveness having small dispersion between adhesion operations. US 2010/168359 A1 teaches tri-functional compounds useful in the production of ophthalmic lenses. The compounds are composed of UV absorber having a polymerization initiator directly or indirectly bonded to the ultraviolet absorber, and an olefinic group directly or indirectly bonded to the ultraviolet absorber. Also described are polymers and ophthalmic lenses produced from the tri-functional compounds.

When an inkjet ink is used in an application for food or toys, components that volatilize or leach out from an ink image should be zero or at a very low level. However, in a photocurable inkjet ink, unreacted initiator or initiator decomposition products with a low molecular weight remain in a film, thus giving rise to a problem with volatilization or leaching out.

In order to solve this problem, published Japanese translation 2011 - 500932 of a PCT application discloses a radically curable liquid containing a polymerizable initiator. Furthermore, published Japanese translation 2011-500932 of a PCT application discloses an acylphosphine oxide compound containing a polymerizable functional group. However, when this compound is used, although a phosphonoyl radical is incorporated in a film, a benzoyl radical, which has lower reactivity, is not incorporated in the cured film; as a result a benzaldehyde compound leaches out, the ink composition cannot satisfy a desired safety level and, furthermore, there is the problem that adhesion to a substrate is degraded by a low molecular weight compound remaining in the film.

Moreover, JP-A-2007-39453 discloses a dental material comprising a bisacylphosphine oxide compound having a polymerizable group. However, when a compound shown in this document is used as an ink composition, there are the problems that the polymerization speed is low and a desired curing sensitivity cannot be obtained.

Furthermore, US Pat Laid-open No. 2012/0142805 discloses an ink composition comprising a bisacylphosphine oxide compound having a polymerizable functional group. However, when this compound is used, there is the problem that a benzaldehyde compound leaches out, as in published Japanese translation 2011-500932 of a PCT application.

Moreover, published Japanese translation 2012-513998 of a PCT application discloses a compound comprising a polymerization initiator bonded to a UV absorber and a compound having an ethylenically unsaturated group. However, when this compound is used in an ink, there are the problems that UV absorption efficiency is low and a desired curability cannot be obtained unless the amount thereof added to the ink is increased.

Furthermore, JP-A-2012-46456 discloses a compound having a polymerizable group via a urethane bond. However, when this compound is used in an ink composition, there is a possibility that a precipitate will form when the ink composition is stored at low temperature.

It is an object of the present invention to provide an ink composition that is excellent in terms of adhesion to a recording medium, for which there is little leaching out (migration) of a component in the cured ink film, and that gives a printed material with suppressed odor, and an inkjet recording method and a printed material employing the ink composition.

It is another object of the present invention to provide a novel bis- or mono-acylphosphine oxide compound.

The objects of the present invention have been attained by means described in <1>, <6> to <7>, or <8>. They are described below together with <2> to <5>, which are preferred embodiments.
<1> An ink composition comprising
   an acylphosphine oxide compound having an acyl group comprisin g a radically polymerizable functional group, and
   a radically polymerizable monomer,
   wherein the acylphosphine oxide compound is an acylphosphine o xide compound represented by Formula (2-1) below, 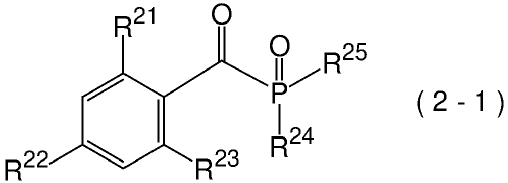 wherein in Formula (2-1), R²¹ to R²³ independently denote a hydrogen at om, an alkyl group having 1 to 4 carbons, an alkoxy group having 1 to 4 carbons, or a group comprising a radically polymerizable functional gro up, at least one of R²¹ to R²³ is a group represented by Formula (2-2) a nd R²⁴ and R²⁵ independently denote an alkyl group, an aryl group, or a n alkoxy group, 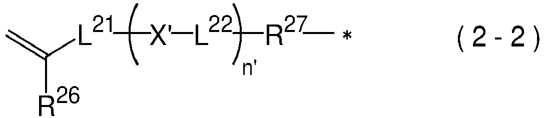 wherein in Formula (2-2), R²⁶ denotes a hydrogen atom or a methyl group, L²¹ denotes
   -COO-, -CONH-, or a phenylene group, X' denotes a chain-form alkylene group having 2 to 8 carbons or a divalent group formed by combining one or more chain-form alkylene group having 1 to 8 carbons and one or more ester bond, L²² denotes -COO- or -CONH-, R²⁷ denotes an alkylene group having 1 to 4 carbons, n' denotes an integer of 0 to 3, and -* denotes a bond to a benzene ring,
<2> the ink composition according to <1>, wherein the radically polymerizable monomer comprises a difunctional radically polymerizable monomer and a trifunctional radically polymerizable monomer as a polyfunctional radically polymerizable monomer,
<3> the ink composition according to <2>, wherein a content of the ra dically polymerizable monomer in the ink composition is 50 to 95 mass% relative to a total mass of the ink composition, and a proportion of the polyfunctional radically polymerizable monomer in the radically polymeriza ble monomer in the ink composition is at least 80 mass% relative to a total amount of the radically polymerizable monomer,
<4> the ink composition according to <1> to <3>, wherein the ink composition is an inkjet ink composition,
<5> the ink composition according to <1> to <4>, wherein the ink composition is an ink composition for food package printing.
<6> An inkjet recording method comprising (a¹) a step of discharging the ink composition according to any one of <1> to <5> onto a recording medium, and (b¹) a step of curing the ink composition by irradiating the discharged ink composition with actinic radiation.
<7> A monoacylphosphine oxide compound represented by Formula (2-3) below, 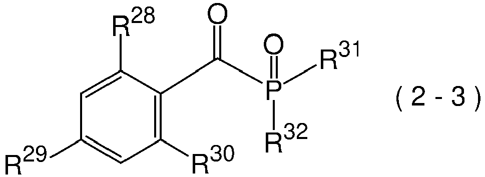 wherein in Formula (2-3), R²⁸ to R³⁰ independently denote a hydrogen atom, an alkyl group having 1 to 4 carbons, an alkoxy group having 1 to 4 carbons, or -CH₂Br, at least two of R²⁸ to R³⁰ are -CH₂Br, and R³¹ and R³² independently denote an alkyl group, an aryl group, or an alkoxy group.
<8> A monoacylphosphine oxide compound represented by Formula (2-1') below, 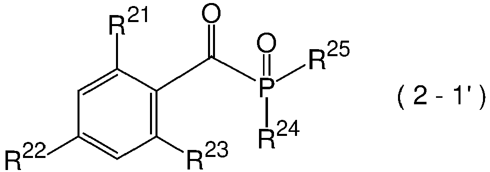 wherein in Formula (2-1'), R²¹ to R²³ independently denote a hydrogen at om, an alkyl group having 1 to 4 carbons, an alkoxy group having 1 to 4 carbons, or a group represented by Formula (2-4), at least one of R²¹ to R²³ is a group represented by Formula (2-4), and R²⁴ and R²⁵ independently denote an alkyl group, an aryl group, or an alkoxy group, 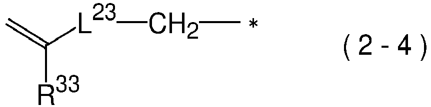 wherein in Formula (2-4), R³³ denotes a hydrogen atom or a methyl group, L²³ denotes -COO- or -CONH-, and -* denotes a bond to a benzene ring.

In accordance with the present invention, there can be provided an ink composition that is excellent in terms of adhesion to a recording medium, for which there is little leaching out (migration) of a component in the cured ink film, and that gives a printed material with suppressed odor, and an inkjet recording method and a printed material employing the ink composition.

Furthermore, in accordance with the present invention, there can be provided a novel mono-acylphosphine oxide compound.

### Brief Description of Drawings

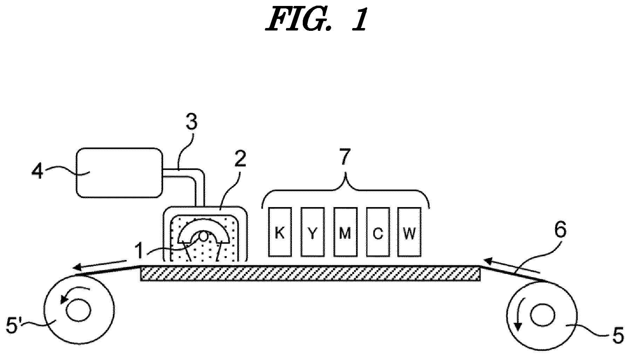

FIG. 1: A schematic drawing showing one example of inkjet recording equipment suitably used in the present invention.

### Explanation of Reference Numerals and Symbols

1: LED light source unit, 2: inert gas blanket, 3: inert gas pipeline, 4: inert gas generating device, 5, 5': support winding rolls, 6: support, 7: inkjet head unit

The present invention is explained in detail below.

In the present specification, the notation 'xx to yy' denotes a numerical range that includes xx and yy.

'(Meth)acrylate', etc. has the same meaning as that of 'acrylate and/or methacrylate', etc., and the same applies below.

Furthermore, in the present invention, 'mass%' and 'wt%' have the same meaning, and 'parts by mass' and 'parts by weight' have the same meaning.

Moreover, in the present invention, a combination of preferred embodiments is more preferable.

The present invention is explained in detail below and is defined in the appended claims.

### (Ink composition)

The ink composition of the present invention comprises an acylphosphine oxide compound having an acyl group comprising a radically polymerizable functional group and a radically polymerizable monomer.

The ink composition of the present invention is an ink composition that can be cured by actinic radiation. 'Actinic radiation' is radiation that can provide the energy for generating an initiating species in the ink composition by irradiation therewith and includes α-rays, γ-rays, X-rays, UV, visible light, and an electron beam. Among them, from the viewpoint of curing sensitivity and ready availability of equipment, UV and an electron beam are preferable, and UV is more preferable.

Furthermore, the ink composition of the present invention is an actinic radiation-curable ink composition, and preferably an oil-based ink composition. The ink composition of the present invention preferably contains as little water and volatile solvent as possible; if they are contained, the content is preferably no greater than 5 mass% relative to the total mass of the ink composition, more preferably no greater than 1 mass%, and yet more preferably no greater than 0.5 mass%.

Moreover, the ink composition of the present invention may suitably be used as an ink composition for inkjet recording (also called an 'inkjet ink composition').

Furthermore, the ink composition of the present invention may suitably be used as an ink composition for package printing, and more suitably as an inkjet ink composition for package printing.

An acylphosphine oxide compound is decomposed by light to generate a benzoyl radical and a phosphinoyl radical, and the reactivity of the benzoyl radical is lower. Because of this, in a cured ink film, a large amount of benzaldehyde compound formed from unreacted benzoyl radical that has not been involved in curing remains. Furthermore, not all of the initiator decomposes, and unreacted acylphosphine oxide compound is also present.

As a result of a detailed examination by the present inventors, it has been found that by the use of an acylphosphine oxide compound having an acyl group comprising a polymerizable functional group in an ink composition, the two compounds that easily remain are incorporated in the film together with the polymerizable compound, and the amount of low molecular weight compound leaching out from an image formed by the ink composition can be reduced and odor produced from the image can be suppressed.

For example, a printed material obtained by conventional actinic radiation-curable inkjet printing has the problem that unreacted polymerization initiator, polymerization initiator residue, etc. migrate from a cured film and, particularly when it is used in the printing of packaging for food wrapping, etc., there is the problem that the amount thereof transferred to the package contents, the so-called migration (leaching-out, transfer), is large. Furthermore, there is the problem that the odor of a cured film is strong and is transferred to the contents or nearby food. Moreover, due to low molecular weight compounds remaining in the film, the strength of the film deteriorates, and adhesion to a support is degraded.

In accordance with the use of the ink composition of the present invention, there can be provided a printed material not only having excellent adhesion to a recording medium but also for which there is little leaching out (migration) of components in the film and for which the odor of a printed material is suppressed.

The ink composition of the present invention is explained in detail below.

### <Acylphosphine oxide compound having acyl group comprising polymerizable functional group>

The ink composition of the present invention comprises an acylphosphine oxide compound having an acyl group comprising a polymerizable functional group.

The acylphosphine oxide compound having an acyl group comprising a polymerizable functional group (hereinafter, also called a 'specific polymerization initiator') is preferably a bis- or mono-acylphosphine oxide compound having an acyl group comprising a polymerizable functional group, which is an acylphosphine oxide compound represented by Formula (2-1), which is described later.

The ink composition of the present invention comprises a monoacylphosphine oxide compound having an acyl group comprising a polymerizable functional group.

The specific polymerization initiator comprises one acyl group bonded to a phosphorus atom and comprises a polymerizable functional group on the acyl group.

The bonding position of the polymerizable functional group may be any position of the acyl group.

The acyl group of the specific polymerization initiator may be an aliphatic acyl group or an aromatic acyl group, but is preferably an aromatic acyl group, and more preferably an optionally substituted benzoyl group to which a polymerizable functional group is bonded directly or via a linking group.

Furthermore, when the acyl group is the above benzoyl group, the position to which the polymerizable functional group is bonded directly or via a linking group is preferably the 2-, 4-, and/or 6-position when the bonding position of the carbonyl group on the benzene ring is defined as the 1-position, and is preferably at least the 4-position from the viewpoint of production suitability.

Moreover, in a bisacylphosphine oxide compound (not falling under the scope of the present invention), the two acyl groups bonded to the phosphorus atom may each comprise a polymerizable functional group.

The number of polymerizable functional groups possessed by the bisacylphosphine oxide compound is preferably 1 from the viewpoint of resistance to film shrinkage occurring when curing, and preferably 2, 3 or 4 from the viewpoint of cure rate and adhesion.

Furthermore, when the acyl group in the bisacylphosphine oxide compound (not falling under the scope of the present invention) comprises a polymerizable functional group, the number of polymerizable functional groups may be 1 or more; it is preferably 1 to 3, more preferably 1 or 2, and yet more preferably 1.

Moreover, when the acyl group in the bisacylphosphine oxide compound (not falling under the scope of the present invention)is the above benzoyl group and the number of polymerizable functional groups is 2 to 4, the positions to which the polymerizable functional groups are bonded directly or via a linking group are preferably at least the 2- and 4-positions when the bonding position of the carbonyl group on the benzene ring is defined as the 1-position.

The number of polymerizable functional groups possessed by the monoacylphosphine oxide compound is preferably 1 from the viewpoint of resistance to shrinkage of a film occurring when curing, and preferably 2 to 5 from the viewpoint of cure rate and adhesion, more preferably 2 to 4, and yet more preferably 2 to 3.

Furthermore, when the acyl group in the monoacylphosphine oxide compound is the above benzoyl group and the number of polymerizable functional groups is 1 to 3, the position to which the polymerizable functional group is bonded directly or via a linking group is preferably 1 to 3 positions selected from the group consisting of the 2-position, 4-position and 6-position when the bonding position of the carbonyl group on the benzene ring is defined as the 1-position. When the acyl group in the monoacylphosphine oxide compound is the above benzoyl group and the number of polymerizable functional groups is 1, it is particularly preferable for it to be bonded to the 4-position when the bonding position of the carbonyl group on the benzene ring is defined as the 1-position.

The acyl group in the specific polymerization initiator may comprise, other than a polymerizable functional group bonded directly or via a linking group, any substituent. Preferred examples of the substituent include an alkyl group and an alkoxy group, more preferred examples include an alkyl group having 1 to 4 carbons and an alkoxy group having 1 to 4 carbons, and a methyl group is particularly preferable.

Furthermore, the linking group is preferably a chain-form or cyclic alkylene group having 1 to 12 carbons, a chain-form or cyclic alkenylene group having 2 to 12 carbons, an arylene group having 6 to 12 carbons, or a divalent group formed by combining one or more of the alkylene group, the alkenylene group, and/or the arylene group and one or more ester bond, ether bond, or urethane bond, more preferably a chain-form or cyclic alkylene group having 1 to 8 carbons, an arylene group having 6 to 12 carbons, or a divalent group formed by combining one or more of the alkylene group and/or the arylene group and one or more ester bond, ether bond, or urethane bond, yet more preferably a chain-form alkylene group having 1 to 8 carbons or a divalent group formed by combining one or more chain-form alkylene group having 1 to 8 carbons and one or more ester bond, and particularly preferably a methylene group. The number of carbons of the linking group is preferably 1 to 40, more preferably 1 to 20, and yet more preferably 1 to 12.

The polymerizable functional group in the present invention includes a radically polymerizable group. When the specific polymerization initiator comprises two or more polymerizable functional groups, the polymerizable functional groups may be identical to or different from each other, and are preferably identical to each other from the viewpoint of production suitability.

Examples of an anionically polymerizable functional group include a (meth)acryloyl group, a (meth)acrylamide group, a styryl group, a conjugated polyene group, a maleate group, a fumarate group, a maleimide group, an itaconic acid residue, a vinyl ketone group, a halovinyl group, a vinyl cyanide group, a cyano(meth)acrylate group, a nitrovinyl group, and an epoxy group.

Examples of a cationically polymerizable functional group include a styryl group, an epoxy group, a vinyl ether group, and an oxetane group.

Examples of the radically polymerizable functional group include a (meth)acryloyl group, a (meth)acrylamide group, a (meth)allyl group, a styryl group, and a maleimide group.

Among them, from the viewpoint of cure rate the polymerizable functional group is preferably a group containing an ethylenically unsaturated bond, more preferably a radically polymerizable functional group, and yet more preferably a (meth)acryloyl group.

### -Bisacylphosphine oxide compound having acyl group comprising polymerizable functional group-

Described but not part of the present invention is a polymerization initiator represented by Formula (1-1) below. 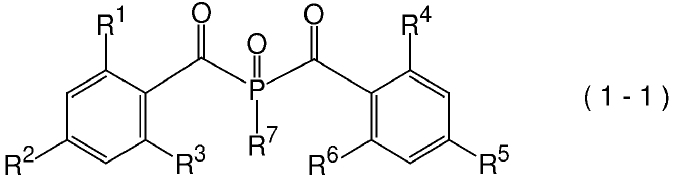 (In Formula (1-1), R¹ to R⁶ independently denote a hydrogen atom, an alkyl group having 1 to 4 carbons, or a group comprising a polymerizable functional group, at least one of R¹ to R⁶ is a group comprising a polymerizable functional group, and R⁷ denotes an alkyl group or an aryl group.)

R¹ to R⁶ are independently preferably a hydrogen atom, a methyl group, or a group comprising a polymerizable functional group, and more preferably a methyl group or a group comprising a polymerizable functional group. With this embodiment, a printed material having suppressed migration of components in a film and reduced odor can be obtained.

Furthermore, in Formula (1-1), the group comprising the polymerizable functional group may have only one polymerizable functional group or it may have two or more; the number of polymerizable functional groups in the group comprising the polymerizable functional group is preferably 1 to 3, more preferably 1 or 2, and yet more preferably 1.

R⁷ is preferably an alkyl group having 1 to 20 carbons or an aryl group having 6 to 20 carbons, more preferably an alkyl group having 1 to 12 carbons or an aryl group having 6 to 12 carbons, yet more preferably an aryl group having 6 to 12 carbons, and particularly preferably a phenyl group. The alkyl group and the aryl group may be substituted. Examples of the substituent include an alkyl group, an alkoxy group, an aryl group, and a halogen atom.

The group comprising the polymerizable functional group denoted by R¹ to R⁶ is preferably a group represented by Formula (1-2). When a plurality of groups represented by Formula (1-2) are present in Formula (1-1), the groups represented by Formula (1-2) may be different from or identical to each other, but are preferably identical to each other. 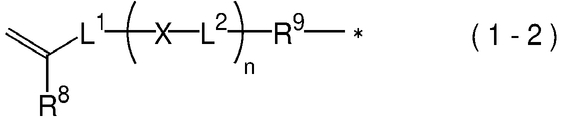 (In Formula (1-2), R⁸ denotes a hydrogen atom or a methyl group, L¹ denotes -COO-, -CONH-, or a phenylene group, X denotes a divalent linking group, L² denotes -COO- or -CONH-, R⁹ denotes an alkylene group having 1 to 4 carbons, n denotes an integer of 0 to 3, and * denotes a position of bonding to the benzene ring.)

R⁸ is preferably a hydrogen atom.

L¹ is preferably -COO- or -CONH-, and more preferably -COO-.

The direction of bonding of -COO- and -CONH- denoted by L¹ and L² may be either bonding direction, but in L¹ it is preferable for the carbonyl group of -COO- or -CONH- to be bonded to the ethylenically unsaturated bond.

X is not particularly limited as long as it is a divalent linking group, but is preferably a chain-form or cyclic alkylene group having 1 to 12 carbons, a chain-form or cyclic alkenylene group having 2 to 12 carbons, an arylene group having 6 to 12 carbons, or a divalent group formed by combining one or more of the alkylene group, the alkenylene group, and/or the arylene group and one or more ester bond, ether bond, or urethane bond, more preferably a chain-form or cyclic alkylene group having 1 to 12 carbons, an arylene group having 6 to 12 carbons, or a divalent group formed by combining one or more of the alkylene group and/or arylene group and one or more ester bond, ether bond, or urethane bond, and yet more preferably a chain-form alkylene group having 2 to 8 carbons or a divalent group formed by combining one or more chain-form alkylene group having 1 to 8 carbons and one or more ester bond.

Furthermore, the smaller the molecular weight of X, the more preferable it is from the viewpoint of curability per amount added (mass%) to the ink composition. Specifically, the molecular weight of X is preferably no greater than 290, more preferably no greater than 170, and yet more preferably no greater than 80. It is also preferably at least 14.

R⁹ is preferably a methylene group.

It is preferable for n to be 0 from the viewpoint of curability per amount added (mass%) to the ink composition.

Specific examples of the bisacylphosphine oxide compound having an acyl group comprising a polymerizable functional group and not falling under the scope of the present invention are listed below, but they are not limited thereto.

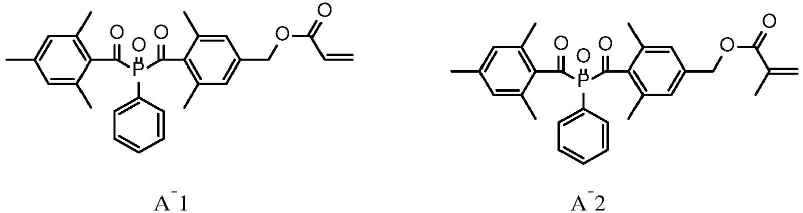

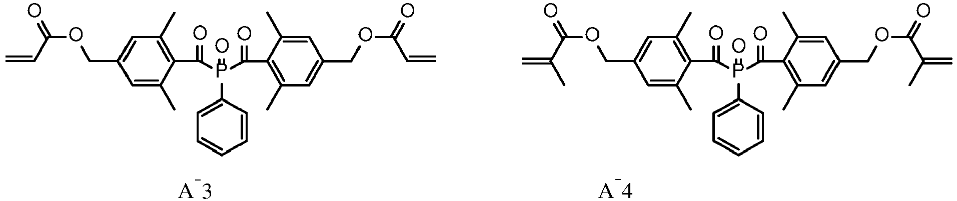

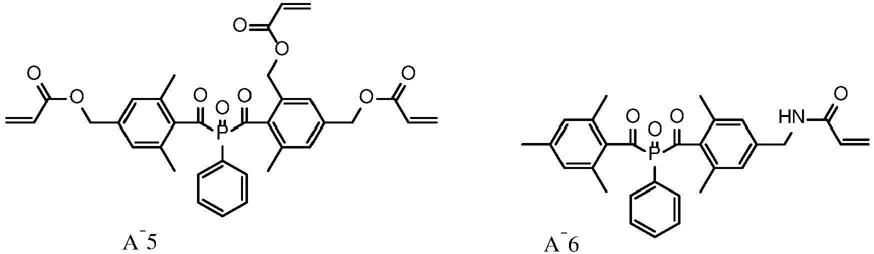

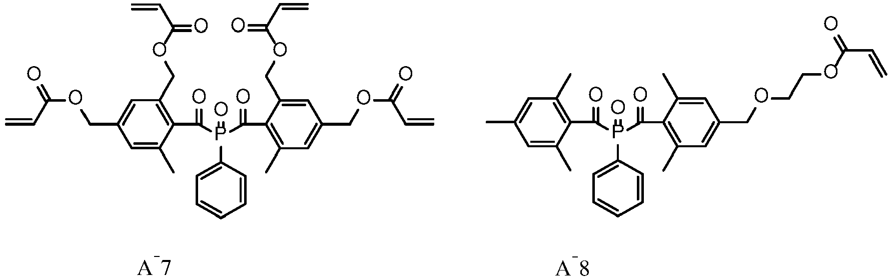

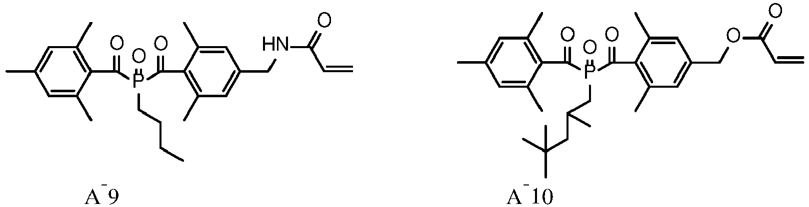

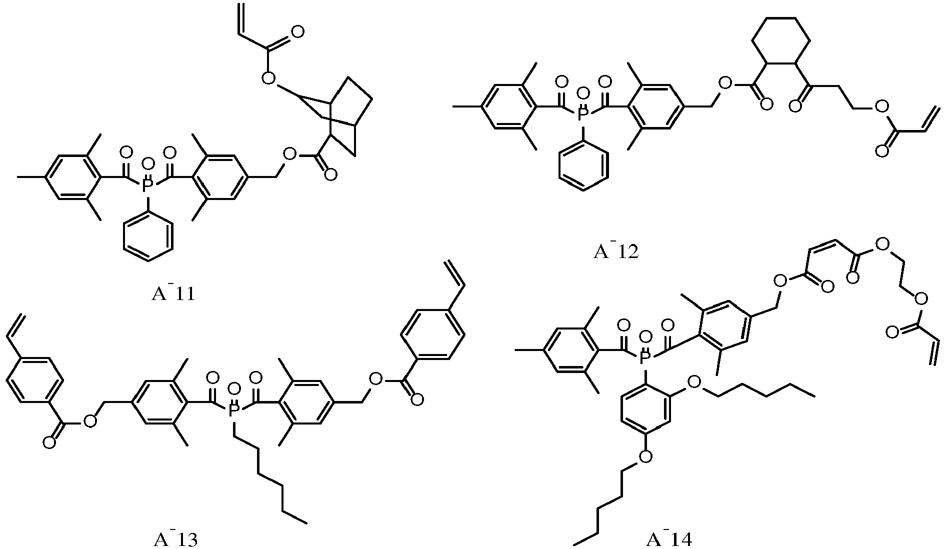

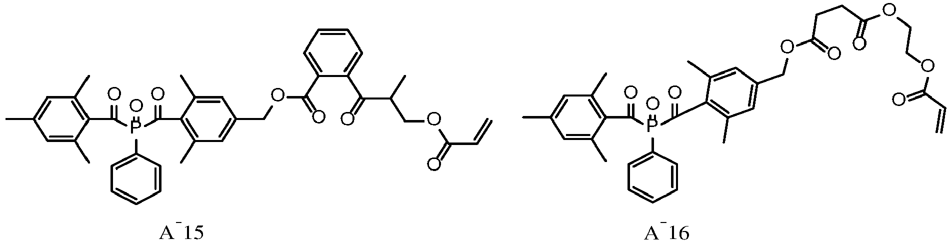

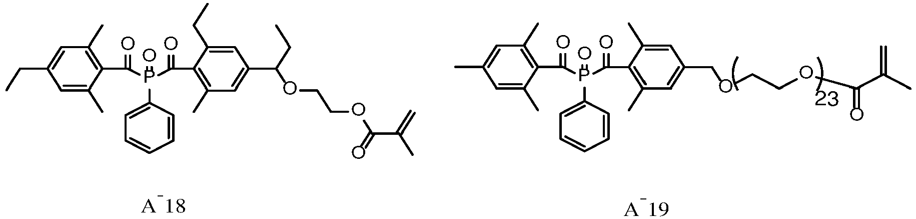

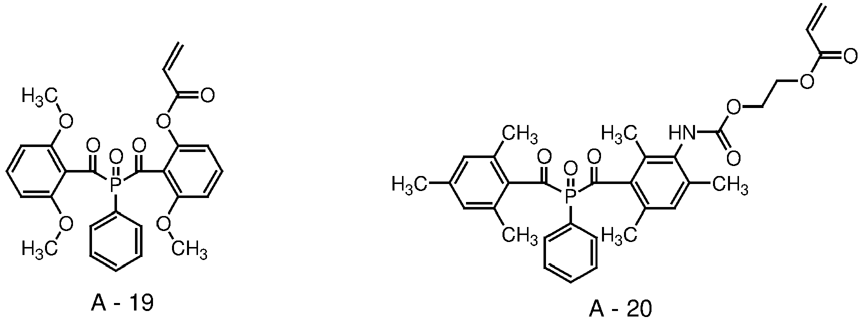

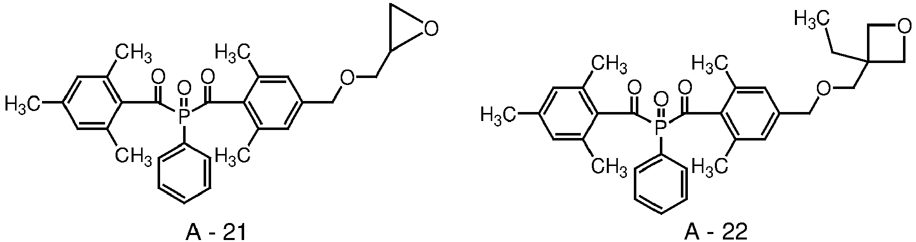

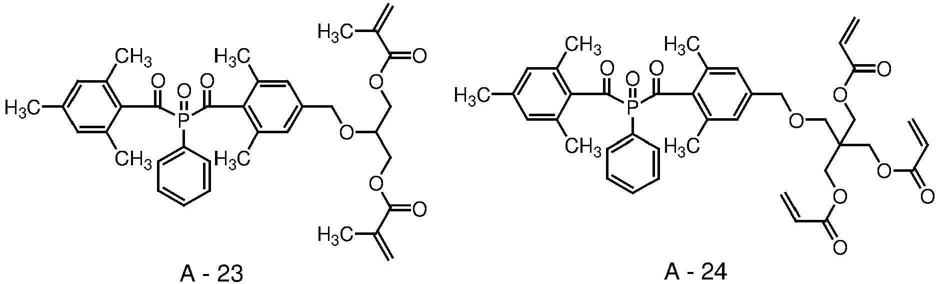

### -Monoacylphosphine oxide compound having acyl group comprising polymerizable functional group-

The specific polymerization initiator is a compound represented by Formula (2-1) below. 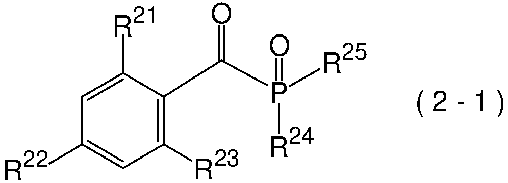 (In Formula (2-1), R²¹ to R²³ independently denote a hydrogen atom, an alkyl group having 1 to 4 carbons, an alkoxy group having 1 to 4 carbon s, or a group comprising a polymerizable functional group, at least one of R²¹ to R²³ is a group represented by Formula (2-2) and R²⁴ and R²⁵ independently denote an alkyl group, an aryl group, or an alkoxy group, 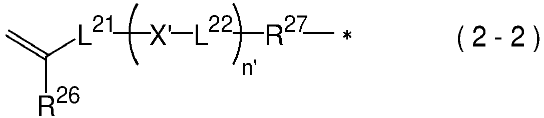 wherein in Formula (2-2), R²⁶ denotes a hydrogen atom or a methyl group, L²¹ denotes -COO-, -CONH-, or a phenylene group, X' denotes a chain-form alkylene group having 2 to 8 carbons or a divalent group formed by combining one or more chain-form alkylene group having 1 to 8 carbons and one or more ester bond, L²² denotes -COO- or -CONH-, R²⁷ denotes an alkylene group having 1 to 4 carbons, n' denotes an integer of 0 to 3, and -* denotes a bond to a benzene ring.)

R²¹ to R²³ are independently preferably a hydrogen atom, a methyl group, a methoxy group, or a group comprising a polymerizable functional group, and more preferably a methyl group, a methoxy group, or a group comprising a polymerizable functional group. With this embodiment, a printed material having suppressed migration of components in a film and reduced odor can be obtained.

Furthermore, in Formula (2-1), the group comprising the polymerizable functional group may have only one polymerizable functional group or two or more; the number of polymerizable functional groups in the group comprising the polymerizable functional group is preferably 1 to 3, more preferably 1 or 2, and yet more preferably 1.

R²⁴ and R²⁵ are independently preferably an alkyl group having 1 to 20 carbons, an aryl group having 6 to 20 carbons, or an alkoxy group having 1 to 20 carbons, more preferably an alkyl group having 1 to 12 carbons, an aryl group having 6 to 12 carbons, or an alkoxy group having 1 to 12 carbons, yet more preferably an aryl group having 6 to 12 carbons or an alkoxy group having 1 to 8 carbons, and particularly preferably a phenyl group or an alkoxy group having 1 to 4 carbons. The alkyl group, the aryl group, and the alkoxy group may be substituted. Examples of the substituent include an alkyl group, an alkoxy group, and an aryl group.

Furthermore, R²⁴ and R²⁵ are independently preferably an aryl group and more preferably a phenyl group, and R²⁴ and R²⁵ are particularly preferably both phenyl groups.

The group comprising the polymerizable functional group denoted by R²¹ to R²³ is a group represented by Formula (2-2). 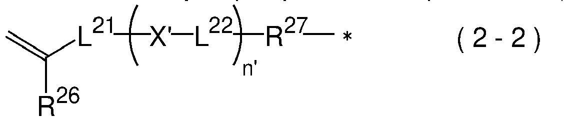 (In Formula (2-2), R²⁶ denotes a hydrogen atom or a methyl group, L²¹ denotes -COO-, -CONH-, or a phenylene group, X' denotes a chain-form alkylene group having 2 to 8 carbons or a divalent group formed by combining one or more chain-form alkylene group having 1 to 8 carbons and one or more ester bond, L²² denotes -COO- or -CONH-, R²⁷ denotes an alkylene group having 1 to 4 carbons, n' denotes an integer of 0 to 3, and -* denotes a bond to a benzene ring.)

R²⁶ is preferably a hydrogen atom.

L²¹ is preferably -COO- or -CONH-, and more preferably -COO-.

The direction of bonding of -COO- and -CONH- denoted by L²¹ and L²² may be either bonding direction, but in L²¹ it is preferable for the carbonyl group of -COO- or -CONH- to be bonded to the ethylenically unsaturated bond.

X' is a chain-form or cyclic alkylene group having 2 to 8 carbons or a divalent group formed by combining one or more chain-form alkylene group having 1 to 8 carbons and one or more ester bond.

Furthermore, the smaller the molecular weight of X', the more preferable it is from the viewpoint of curability per amount added (mass%) to the ink composition. Specifically, the molecular weight of X' is preferably no greater than 290, more preferably no greater than 170, and yet more preferably no greater than 80. It is also preferably at least 14.

R²⁷ is preferably a methylene group.

It is preferable for n' to be 0 from the viewpoint of curability per amount added (mass%) to the ink composition.

Furthermore, the group comprising the polymerizable functional group denoted by R²¹ to R²³ is preferably a group represented by Formula (2-4). 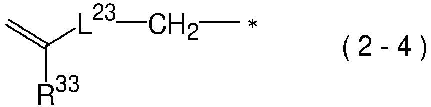 (In Formula (4), R³³ denotes a hydrogen atom or a methyl group, L²³ denotes -COO- or -CONH-, and -* denotes a bond to a benzene ring.)

R³³ is preferably a hydrogen atom.

L²³ is preferably -COO-.

The direction of bonding of -COO- and -CONH- denoted by L²³ may be either bonding direction, but it is preferable for the carbonyl group of -COO- or -CONH- to be bonded to the ethylenically unsaturated bond. That is, the group represented by Formula (2-4) is preferably a (meth)acryloyloxymethyl group.

Specific examples of the monoacylphosphine oxide compound having an acyl group comprising a polymerizable functional group are listed below, but they are not limited thereto. In the Formulae below, Ph denotes a phenyl group and Bu denotes an n-butyl group. However, the following formulae do not fall under the scope of the present invention: A'-1, A'-3, A'-4, A'-5, A'-7, A'-9, A'-17, A'-18, A'-21, A'-22 and A'-24 to A'-26.

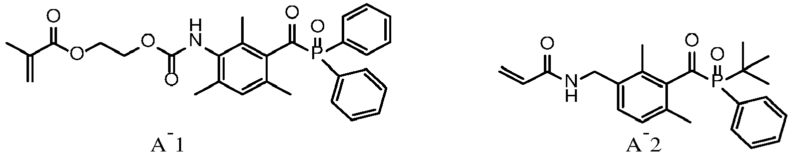

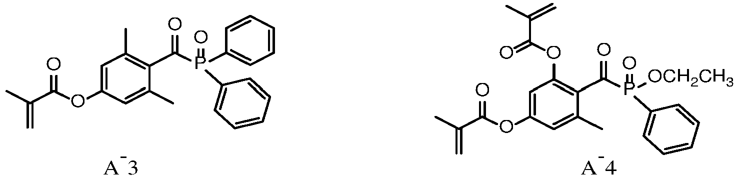

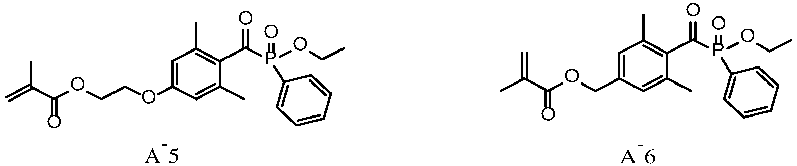

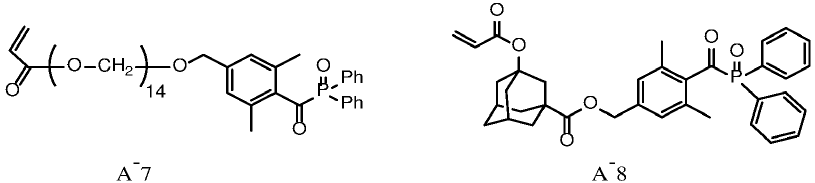

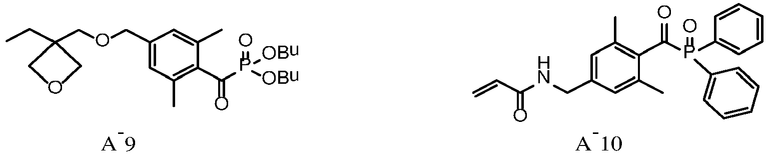

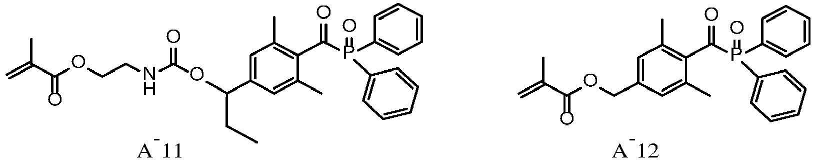

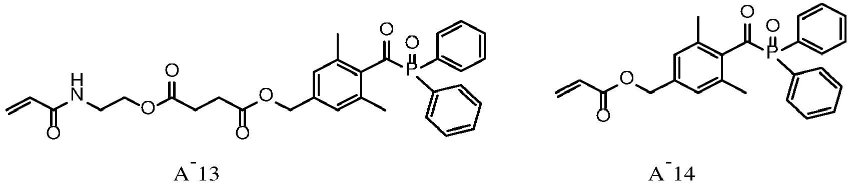

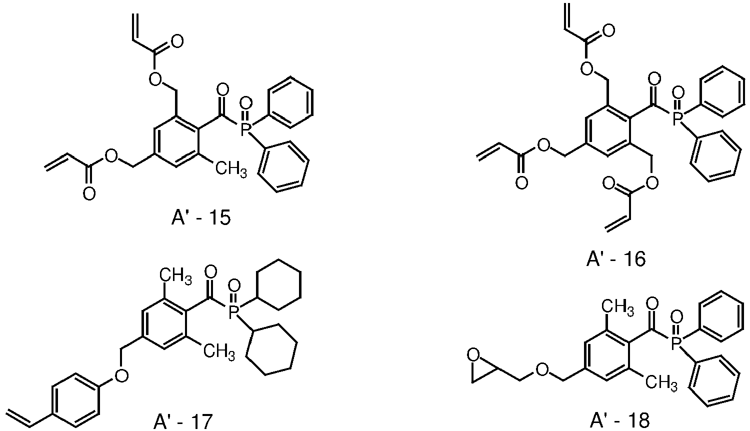

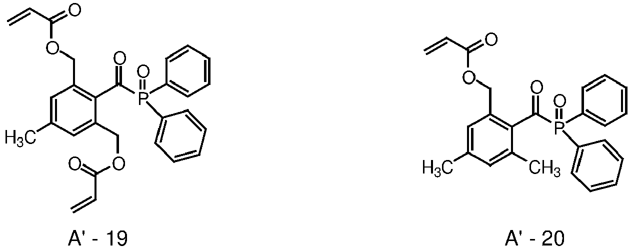

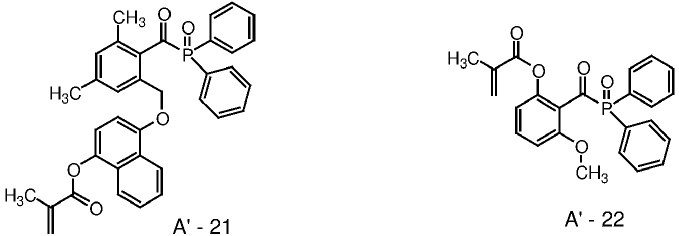

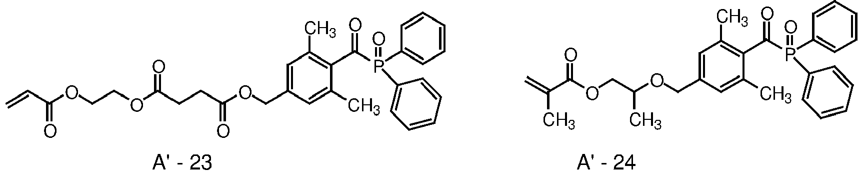

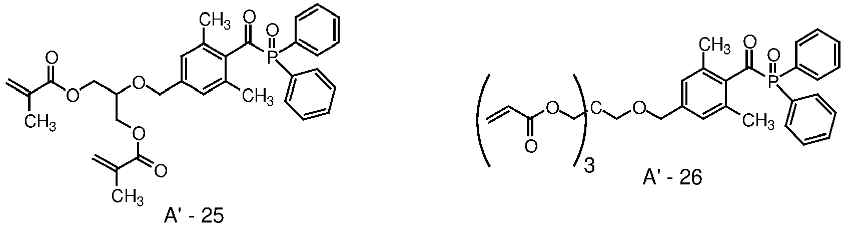

The content of the specific polymerization initiator in the ink composition of the present invention is not particularly limited, but it is preferably 0.1 to 20 mass% relative to the total mount of the ink composition, more preferably 1 to 15 mass%, and yet more preferably 1 to 10 mass%.

The content of the bisacylphosphine oxide compound (not falling under the scope of the present invention) having an acyl group comprising a polymerizable functional group in the ink composition is not particularly limited, but is preferably 0.1 to 20 mass% relative to the total amount of the ink composition, and more preferably 1 to 15 mass%.

The content of the monoacylphosphine oxide compound having an acyl group comprising a polymerizable functional group in the ink composition of the present invention is not particularly limited, but is preferably 0.1 to 20 mass% relative to the total amount of the ink composition, and more preferably 1 to 10 mass%.

### <Polymerizable compound>

The ink composition of the present invention comprises a polymerizable compound (also called simply a 'monomer' or a 'polymerizable monomer').

The polymerizable compound is not particularly limited as long as it is a compound that can be made to undergo a polymerization reaction by the application of some form of energy and cure; any form of monomer, oligomer, or polymer may be used, and various types of known polymerizable monomers known as radically polymerizable monomers that can be made to undergo a polymerization reaction by means of an initiating species generated from a polymerization initiator added as desired are particularly preferable.

With regard to the polymerizable compound, one type or a plurality of types in combination may be used for the purpose of adjusting the reaction rate, cured film physical properties, ink composition physical properties, etc. Furthermore, the polymerizable compound may be a monofunctional compound or a polyfunctional compound. When the proportion of the monofunctional polymerizable compound is large, a cured material becomes flexible, and when the proportion of the polyfunctional polymerizable compound is large, curability tends to be excellent. Therefore, the ratio of the monofunctional polymerizable compound to the polyfunctional polymerizable compound should be determined freely according to the intended application.

As the polymerizable compound, various types of known radically polymerizable monomer that can be made to undergo a polymerization reaction by an initiating species generated by a photoradical initiator may also be used.

Examples of the radically polymerizable monomer include a (meth)acrylate, a (meth)acrylamide, and an aromatic vinyl. In the present specification, both or either one of 'acrylate' and 'methacrylate' are sometimes referred to as '(meth)acrylate', and both or either one of 'acrylic' and 'methacrylic' are sometimes referred to as '(meth)acrylic'.

Examples of the (meth)acrylate used as the radically polymerizable monomer include a monofunctional (meth)acrylate, a difunctional (meth)acrylate, a trifunctional (meth)acrylate, a tetrafunctional (meth)acrylate, a pentafunctional (meth)acrylate, and a hexafunctional (meth)acrylate.

Specific examples of monofunctional (meth)acrylates include hexyl (meth)acrylate, 2-ethylhexyl (meth)acrylate, *tert*-octyl (meth)acrylate, isoamyl (meth)acrylate, decyl (meth)acrylate, isodecyl (meth)acrylate, stearyl (meth)acrylate, isostearyl (meth)acrylate, cyclohexyl (meth)acrylate, 4-n-butylcyclohexyl (meth)acrylate, bornyl (meth)acrylate, isobornyl (meth)acrylate, benzyl (meth)acrylate, 2-ethylhexyldiglycol (meth)acrylate, butoxyethyl (meth)acrylate, 2-chloroethyl (meth)acrylate, 4-bromobutyl (meth)acrylate, cyanoethyl (meth)acrylate, benzyl (meth)acrylate, butoxymethyl (meth)acrylate, 3-methoxybutyl (meth)acrylate, an alkoxymethyl (meth)acrylate, an alkoxyethyl (meth)acrylate, 2-(2-methoxyethoxy)ethyl (meth)acrylate, 2-(2-butoxyethoxy)ethyl (meth)acrylate, 2,2,2-trifluoroethyl (meth)acrylate, 1 H,1 H,2H,2H-perfluorodecyl (meth)acrylate, 4-butylphenyl (meth)acrylate, phenyl (meth)acrylate, 2,4,5-trimethylphenyl (meth)acrylate, 4-chlorophenyl (meth)acrylate, phenoxymethyl (meth)acrylate, phenoxyethyl (meth)acrylate, glycidyl (meth)acrylate, glycidyloxybutyl (meth)acrylate, glycidyloxyethyl (meth)acrylate, glycidyloxypropyl (meth)acrylate, tetrahydrofurfuryl (meth)acrylate, a hydroxyalkyl (meth)acrylate, 2-hydroxyethyl (meth)acrylate, 3-hydroxypropyl (meth)acrylate, 2-hydroxypropyl (meth)acrylate, 2-hydroxybutyl (meth)acrylate,
4-hydroxybutyl (meth)acrylate, 3-hydroxybutyl (meth)acrylate, dimethylaminoethyl (meth)acrylate, diethylaminoethyl (meth)acrylate, dimethylaminopropyl (meth)acrylate, diethylaminopropyl (meth)acrylate, trimethoxysilylpropyl (meth)acrylate, trimethylsilylpropyl (meth)acrylate, polyethylene oxide monomethyl ether (meth)acrylate, oligoethylene oxide monomethyl ether (meth)acrylate, polyethylene oxide (meth)acrylate, oligoethylene oxide (meth)acrylate, an oligoethylene oxide monoalkyl ether (meth)acrylate, a polyethylene oxide monoalkyl ether (meth)acrylate, dipropylene glycol (meth)acrylate, a polypropylene oxide monoalkyl ether (meth)acrylate, an oligopropylene oxide monoalkyl ether (meth)acrylate, 2-(meth)acryloyloxyethylsuccinic acid, 2-(meth)acryloyloxyhexahydrophthalic acid, 2-(meth)acryloyloxyethyl-2-hydroxypropyl phthalate, butoxydiethylene glycol (meth)acrylate, trifluoroethyl (meth)acrylate, perfluorooctylethyl (meth)acrylate, 2-hydroxy-3-phenoxypropyl (meth)acrylate, ethylene oxide(EO)-modified phenol (meth)acrylate, EO-modified cresol (meth)acrylate, EO-modified nonylphenol (meth)acrylate, propylene oxide(PO)-modified nonylphenol (meth)acrylate, EO-modified 2-ethylhexyl (meth)acrylate, dicyclopentenyl (meth)acrylate, dicyclopentenyloxyethyl (meth)acrylate, dicyclopentanyl (meth)acrylate, (3-ethyl-3-oxetanylmethyl) (meth)acrylate, and phenylethylene glycol (meth)acrylate.

Specific examples of difunctional (meth)acrylates include 1,6-hexanediol di(meth)acrylate, 1,10-decanediol di(meth)acrylate, neopentyl glycol di(meth)acrylate, 2,4-dimethyl-1,5-pentanediol di(meth)acrylate, butylethylpropanediol di(meth)acrylate, ethoxylated cyclohexanemethanol di(meth)acrylate, polyethylene glycol di(meth)acrylate, oligoethylene glycol di(meth)acrylate, ethylene glycol di(meth)acrylate, 2-ethyl-2-butylbutanediol di(meth)acrylate, neopentyl glycol hydroxypivalate di(meth)acrylate, EO-modified bisphenol A di(meth)acrylate, bisphenol F polyethoxydi(meth)acrylate, polypropylene glycol di(meth)acrylate, oligopropylene glycol di(meth)acrylate, 1,4-butanediol di(meth)acrylate, 2-ethyl-2-butylpropanediol di(meth)acrylate, 1,9-nonane di(meth)acrylate, propoxylated ethoxylated bisphenol A di(meth)acrylate, tricyclodecane di(meth)acrylate, dipropylene glycol di(meth)acrylate, tripropylene glycol di(meth)acrylate, and PO-modified neopentyl glycol di(meth)acrylate.

Specific examples of trifunctional (meth)acrylates include trimethylolpropane tri(meth)acrylate, trimethylolethane tri(meth)acrylate, an alkylene oxide-modified tri(meth)acrylate of trimethylolpropane, pentaerythritol tri(meth)acrylate, dipentaerythritol tri(meth)acrylate, trimethylolpropane tris((meth)acryloyloxypropyl) ether, an isocyanuric acid alkylene oxide-modified tri(meth)acrylate, propionic acid dipentaerythritol tri(meth)acrylate, tris((meth)acryloyloxyethyl) isocyanurate, hydroxypivalaldehyde-modified dimethylolpropane tri(meth)acrylate, sorbitol tri(meth)acrylate, propoxylated trimethylolpropane tri(meth)acrylate, and ethoxylated glycerol triacrylate.

Specific examples of tetrafunctional (meth)acrylates include pentaerythritol tetra(meth)acrylate, sorbitol tetra(meth)acrylate, ditrimethylolpropane tetra(meth)acrylate, dipentaerythritol propionate tetra(meth)acrylate, and ethoxylated pentaerythritol tetra(meth)acrylate.

Specific examples of pentafunctional (meth)acrylates include sorbitol penta(meth)acrylate and dipentaerythritol penta(meth)acrylate.

Specific examples of hexafunctional (meth)acrylates include dipentaerythritol hexa(meth)acrylate, sorbitol hexa(meth)acrylate, an alkylene oxide-modified hexa(meth)acrylate of phosphazene, and ε-caprolactone-modified dipentaerythritol hexa(meth)acrylate.

Examples of the (meth)acrylamide used as a radically polymerizable monomer include (meth)acrylamide, *N*-methyl (meth)acrylamide, *N*-ethyl (meth)acrylamide, *N*-propyl (meth)acrylamide, *N*-*n*-butyl (meth)acrylamide, *N*-*t*-butyl (meth)acrylamide, *N*-butoxymethyl (meth)acrylamide, *N*-isopropyl (meth)acrylamide, *N*-methylol (meth)acrylamide, *N*,*N*-dimethyl (meth)acrylamide, *N*,*N*-diethyl (meth)acrylamide, and (meth)acryloylmorpholine.

Specific examples of the aromatic vinyl compound used as a radically polymerizable monomer include styrene, methylstyrene, dimethylstyrene, trimethylstyrene, ethylstyrene, isopropylstyrene, chloromethylstyrene, methoxystyrene, acetoxystyrene, chlorostyrene, dichlorostyrene, bromostyrene, methyl vinylbenzoate, 3-methylstyrene, 4-methylstyrene, 3-ethylstyrene, 4-ethylstyrene, 3-propylstyrene, 4-propylstyrene, 3-butylstyrene, 4-butylstyrene, 3-hexylstyrene, 4-hexylstyrene, 3-octylstyrene, 4-octylstyrene, 3-(2-ethylhexyl)styrene, 4-(2-ethylhexyl)styrene, allylstyrene, isopropenylstyrene, butenylstyrene, octenylstyrene, 4-*t*-butoxycarbonylstyrene, and 4-*t*-butoxy styrene.

Furthermore, examples of the radically polymerizable monomer used in the present invention include a vinyl ester (vinyl acetate, vinyl propionate, vinyl versatate, etc.), an allyl ester (allyl acetate, etc.), a halogen-containing monomer (vinylidene chloride, vinyl chloride, etc.), a vinyl ether (methyl vinyl ether, butyl vinyl ether, hexyl vinyl ether, methoxy vinyl ether, 2-ethylhexyl vinyl ether, methoxyethyl vinyl ether, cyclohexyl vinyl ether, chloroethyl vinyl ether, triethylene glycol divinyl ether, etc.), a vinyl cyanide ((meth)acrylonitrile, etc.), an olefin (ethylene, propylene, etc.), and a *N-*vinyllactam (N-vinylcaprolactam, etc.).

The content of the polymerizable compound in the ink composition of the present invention is preferably 50 to 95 mass% relative to the total mass of the ink composition from the viewpoint of curability, and more preferably 55 to 92 mass%.

The proportion of the polyfunctional polymerizable compound in the polymerizable compound in the ink composition of the present invention is preferably at least 80 mass% relative to the total amount of polymerizable compound, more preferably at least 90 mass%, and yet more preferably at least 95 mass%. With this embodiment, the curability is better, and migration and odor of a cured film are further suppressed.

Furthermore, the polymerizable compound preferably comprises at least a difunctional polymerizable compound and a trifunctional polymerizable compound. With this embodiment, curability is better, and migration and odor of a cured film are further suppressed.

### <Other polymerization initiator>

The ink composition of the present invention may, as necessary, comprise a polymerization initiator other than the acylphosphine oxide compound having an acyl group comprising a polymerizable functional group.

The other polymerization initiator is preferably a radical or cationic polymerization initiator, and particularly preferably a radical polymerization initiator. Examples thereof include polymerization initiators described in JP-A-2009-138172.

### -Sensitizer-

The ink composition of the present invention may comprise, as a polymerization initiator, a compound which functions as a sensitizer (hereinafter also calls 'sensitizer') in order to promote decomposition of the photopolymerization initiator by absorbing specific actinic radiation.

Examples of the sensitizer include polynuclear aromatic compounds (e.g. pyrene, perylene, triphenylene, 2-ethyl-9,10-dimethoxy anthracene), xanthenes (e.g. fluorescein, eosin, erythrosine, rhodamine B, rose bengal), cyanines (e.g. thiacarbocyanine, oxacarbocyanine), merocyanines (e.g. merocyanine, carbomerocyanine), thiazines (e.g. thionine, methylene blue, toluidine blue), acridines (e.g. acridine orange, chloroflavin, acriflavine), anthraquinones (e.g. anthraquinone), squaryliums (e.g. squarylium), and coumarins (e.g. 7-diethylamino-4-methylcoumarin), etc.

With regard to the sensitizer, one type may be used on its own or two or more types may be used in combination.

### -Cosensitizer-

The ink composition of the present invention may comprise a cosensitizer, in order to further improve the sensitivity and to suppress inhibition by oxygen of polymerization.

Examples of such a cosensitizer include amines such as compounds described in M. R. Sander et al., 'Journal of Polymer Society', Vol. 10, p. 3173 (1972), JP-B-44-20189, JP-A-51-82102, JP-A-52-134692, JP-A-59-138205, JP-A-60-84305, JP-A-62-18537, JP-A-64-33104, and Research Disclosure No. 33825, and specific preferred examples of the amines include triethanolamine, ethyl p-dimethylaminobenzoate, p-formyldimethylaniline, and *p*-methylthiodimethylaniline.

Other examples of the cosensitizer include thiols and sulfides such as thiol compounds described in JP-A-53-702, JP-B-55-500806, and JP-A-5-142772, and disulfide compounds of JP-A-56-75643, and specific examples of the thiols and the sulfides include 2-mercaptobenzothiazole, 2-mercaptobenzoxazole, 2-mercaptobenzimidazole, 2-mercapto-4(3H)-quinazoline, and β-mercaptonaphthalene.

Yet other examples of the cosensitizer include amino acid compounds (e.g. *N*-phenylglycine, etc.), organometallic compounds described in JP-B-48-42965 (e.g. tributyltin acetate, etc.), hydrogen-donating compounds described in JP-B-55-34414, sulfur compounds described in JP-A-6-308727 (e.g. trithiane, etc.), phosphorus compounds described in JP-A-6-250387 (diethylphosphite, etc.), and Si-H and Ge-H compounds described in JP-A-8-54375, etc.

The total content of other polymerization initiators is preferably 1 to 20 mass% of the entire ink composition, more preferably 2 to 18 mass%, yet more preferably 5 to 15 mass%, and particularly preferably 10 to 15 mass%. When in this range, the curability is excellent.

### <Colorant>

In the present invention, the ink composition may comprise a colorant, as necessary.

The colorant is not particularly limited, but a pigment and an oil-soluble dye that have excellent weather resistance and rich color reproduction are preferable, and it may be selected from any known coloring agent such as a soluble dye. It is preferable that the colorant does not function as a polymerization inhibitor in a polymerization reaction, which is a curing reaction. This is because the sensitivity of the curing reaction by actinic radiation should not be degraded.

A pigment functions as a colorant for the ink composition, but in the present invention, as a result of a pigment having a micro particle size as described later being uniformly and stably dispersed in the ink composition, the ink composition of the present invention can form an image having excellent coloration, and excellent sharpness and weatherability.

The pigment is not particularly limited and may be selected appropriately according to an intended application; examples thereof include known organic and inorganic pigments, resin particles dyed with a dye, a commercial pigment dispersion, and a surface-treated pigment (e.g. one obtained by dispersing a pigment in an insoluble resin, etc. as a dispersion medium or one obtained by grafting the surface of a pigment with a resin, etc.). Specific examples of the pigment include those described in, for example, 'Ganryo no Jiten' (Dictionary of Pigments) Ed. by Seijirou Ito (2000, Asakura), I Hashimoto 'Yuki Ganryo Handobukku' (Organic Pigment Handbook), (2006, Color Office), W. Herbst, K. Hunger 'Industrial Organic Pigments' (1992, Wiley-VHC), JP-A-2002-12607, JP-A-2002-188025, JP-A-2003-26978, and JP-A-2003-342503.

Examples of the organic pigment and the inorganic pigment include a yellow pigment, a red pigment, a magenta pigment, a blue pigment, a cyan pigment, a green pigment, an orange pigment, a brown pigment, a violet pigment, a black pigment, and a white pigment.

The yellow pigment is a pigment exhibiting a yellow color, and examples thereof include monoazo pigments such as C.I. Pigment Yellow 1 (Fast Yellow G, etc.) and C.I. Pigment Yellow 74, disazo pigments such as C.I. Pigment Yellow 12 (Disazo Yellow AAA, etc.), C.I. Pigment Yellow 17, C.I. Pigment Yellow 97, C.I. Pigment Yellow 3, C.I. Pigment Yellow 16, C.I. Pigment Yellow 83, C.I. Pigment Yellow 155, and C.I. Pigment Yellow 219, benzidine-free azo pigments such as C.I. Pigment Yellow 180, azo lake pigments such as C.I. Pigment Yellow 100 (Tartrazine Yellow Lake, etc.), condensed azo pigments such as C.I. Pigment Yellow 95 (Azo Condensation Yellow GR, etc.), C.I. Pigment Yellow 93, C.I. Pigment Yellow 94, C.I. Pigment Yellow 128, and C.I. Pigment Yellow 166, acidic dye lake pigments such as C.I. Pigment Yellow 115 (Quinoline Yellow Lake, etc.), basic dye lake pigments such as C.I. Pigment Yellow 18 (Thioflavine Lake, etc.), anthraquinone pigments such as C.I. Pigment Yellow 24 (Flavanthrone Yellow), isoindolinone pigments such as C.I. Pigment Yellow 110 (Quinophthalone Yellow), isoindoline pigments such as C.I. Pigment Yellow 139 (Isoindoline Yellow), pyrazolone pigments such as C.I. Pigment Yellow 60 (Pyrazolone Yellow), acetrone pigments such as C.I. Pigment Yellow 120, C.I. Pigment Yellow 154, C.I. Pigment Yellow 167, C.I. Pigment Yellow 151, C.I. Pigment Yellow 175, C.I. Pigment Yellow 180, C.I. Pigment Yellow 181, and C.I. Pigment Yellow 194, metal complex pigments such as C.I. Pigment Yellow 150, nitroso pigments such as C.I. Pigment Yellow 153 (Nickel Nitroso Yellow, etc.), and metal complex azomethine pigments such as C.I. Pigment Yellow 117 (Copper Azomethine Yellow, etc.), and C.I. Pigment Yellow.

The magenta pigment is a pigment exhibiting a red or magenta color, and examples thereof include monoazo pigments such as C.I. Pigment Red 3 (Toluidine Red, etc.), B-naphthol pigments such as C.I. Pigment Red 1, C.I. Pigment Red 4, and C.I. Pigment Red 6, disazo pigments such as C.I. Pigment Red 38 (Pyrazolone Red B, etc.), azo lake pigments such as C.I. Pigment Red 53:1 (Lake Red C, etc.), C.I. Pigment Red 57:1 (Brilliant Carmine 6B, etc.), C.I. Pigment Red 52:1, and C.I. Pigment Red 48 (B-oxynaphthenic acid lake, etc.), condensed azo pigments such as C.I. Pigment Red 144, C.I. Pigment Red 166, C.I. Pigment Red 220, C.I. Pigment Red 214, C.I. Pigment Red 221, and C.I. Pigment Red 242 (Azo Condensation Red, etc.), acidic dye lake pigments such as C.I. Pigment Red 174 (Phloxine B Lake, etc.) and C.I. Pigment Red 172 (Erythrosine Lake, etc.), basic dye lake pigments such as C.I. Pigment Red 81 (Rhodamine 6G' Lake, etc.), anthraquinone pigments such as C.I. Pigment Red 177 (Dianthraquinonyl Red, etc.), thioindigo pigments such as C.I. Pigment Red 88 (Thioindigo Bordeaux, etc.), perinone pigments such as C.I. Pigment Red 194 (Perinone Red, etc.), perylene pigments such as C.I. Pigment Red 149 (Perylene Scarlet, etc.), C.I. Pigment Red 179, C.I. Pigment Red 178, C.I. Pigment Red 190, C.I. Pigment Red 224, and C.I. Pigment Red 123, quinacridone pigments such as C.I. Pigment Violet 19 (unsubstituted quinacridone), C.I. Pigment Red 122 (Quinacridone Magenta, etc.), C.I. Pigment Red 262, C.I. Pigment Red 207, and C.I. Pigment Red 209, isoindolinone pigments such as C.I. Pigment Red 180 (Isoindolinone Red 2BLT, etc.), alizarin lake pigments such as C.I. Pigment Red 83 (Madder Lake, etc.), naphthlone pigments such as C.I. Pigment Red 171, C.I. Pigment Red 175, C.I. Pigment Red 176, C.I. Pigment Red 185, and C.I. Pigment Red 208, naphthol AS type pigments such as C.I. Pigment Red 247, naphthol AS pigments such as C.I. Pigment Red 2, C.I. Pigment Red 5, C.I. Pigment Red 21, C.I. Pigment Red 170, C.I. Pigment Red 187, C.I. Pigment Red 256, C.I. Pigment Red 268, and C.I. Pigment Red 269, and diketopyrrolopyrrole pigments such as C.I. Pigment Red 254, C.I. Pigment Red 255, C.I. Pigment Red 264, and C.I. Pigment Red 272.

The cyan pigment is a pigment exhibiting a blue or cyan color, and examples thereof include disazo pigments such as C.I. Pigment Blue 25 (Dianisidine Blue, etc.), phthalocyanine pigments such as C.I. Pigment Blue 15, C.I. Pigment Blue 15:1, C.I. Pigment Blue 15:2, C.I. Pigment Blue 15:3, C.I. Pigment Blue 15:4, C.I. Pigment Blue 15:6, and C.I. Pigment Blue 16 (Phthalocyanine Blue, etc.), acidic dye lake pigments such as C.I. Pigment Blue 24 (Peacock Blue Lake, etc.), basic dye lake pigments such as C.I. Pigment Blue 1 (Victoria Pure Blue BO Lake, etc.), anthraquinone pigments such as C.I. Pigment Blue 60 (Indanthrone Blue, etc.), and alkali blue pigments such as C.I. Pigment Blue 18 (Alkali Blue V-5:1).

The green pigment is a pigment exhibiting a green color, and examples include phthalocyanine pigments such as C.I. Pigment Green 7 (phthalocyanine green) and C.I. Pigment Green 36 (phthalocyanine green) and azo metal complex pigments such as C.I. Pigment Green 8 and C.I. Pigment Green 10.

The orange pigment is a pigment exhibiting an orange color, and examples include isoindoline-based pigments such as C.I. Pigment Orange 66 (isoindoline orange), anthraquinone-based pigments such as C.I. Pigment Orange 51 (dichloropyranthrone orange), β-naphthol pigments such as C.I. Pigment Orange 2, C.I. Pigment Orange 3, and C.I. Pigment Orange 5, naphthol AS pigments such as C.I. Pigment Orange 4, C.I. Pigment Orange 22, C.I. Pigment Orange 24, C.I. Pigment Orange 38, and C.I. Pigment Orange 74, isoindolinone pigments such as C.I. Pigment Orange 61, perinone pigments such as C.I. Pigment Orange 43, disazo pigments such as C.I. Pigment Orange 15 and C.I. Pigment Orange 16, quinacridone pigments such as C.I. Pigment Orange 48 and C.I. Pigment Orange 49, an acetolone pigment such as C.I. Pigment Orange 36, C.I. Pigment Orange 62, C.I. Pigment Orange 60, C.I. Pigment Orange 64, and C.I. Pigment Orange 72, and pyrazolone pigments such as C.I. Pigment Orange 13 and C.I. Pigment Orange 34.

The brown pigment is a pigment exhibiting a brown color, and examples include naphtholone pigments such as C.I. Pigment Brown 25 and C.I. Pigment Brown 32.

The violet pigment is a pigment exhibiting a violet color, and examples include naphtholone pigments such as C.I. Pigment Violet 32, perylene pigments such as C.I. Pigment Violet 29, naphthol AS pigments such as C.I. Pigment Violet 13, C.I. Pigment Violet 17, and C.I. Pigment Violet 50, and dioxazine pigments such as C.I. Pigment Violet 23 and C.I. Pigment Violet 37.

The black pigment is a pigment exhibiting a black color, and examples thereof include carbon black, titanium black, indazine pigments such as C.I. Pigment Black 1 (aniline black), and perylene pigments such as C.I. Pigment Black 31 and C.I. Pigment Black 32.

Examples of the white pigment include basic lead carbonate (2PbCO₃Pb(OH)₂, also known as silver white), zinc oxide (ZnO, also known as zinc white), titanium oxide (TiO₂, also known as titanium white),and strontium titanate (SrTiO₃, also known as titanium strontium white).

Inorganic particles that are used as a white pigment may be a single substance or composite particles with an oxide of silicon, aluminum, zirconium, titanium, etc., an organic metal compound, or an organic compound.

Among them, the titanium oxide is suitably used since, compared with other white pigments, it has low specific gravity, a large refractive index, a physical and chemical stability, high hiding power and coloring power as a pigment, and excellent durability toward acid, alkali, and other environments. In addition to the titanium oxide, another white pigment (which may be a white pigment other than those described above) may be used in combination.

For dispersion of the pigment, for example, dispersing equipment such as a ball mill, a sand mill, an attritor, a roll mill, a jet mill, a homogenizer, a paint shaker, a kneader, an agitator, a Henschel mixer, a colloidal mill, an ultrasonic homogenizer, a pearl mill, or a wet-type jet mill may suitably be used.

In the present invention, when dispersing the pigment, it is particularly preferable to add a dispersant mentioned below.

Furthermore, when the pigment is dispersed, as a dispersion adjuvant it is also possible to use a synergist as necessary according to the various types of pigment. The content of the dispersion adjuvant in the ink composition is preferably 1 to 50 parts by mass relative to 100 parts by mass of the pigment.

A dispersion medium used when dispersing the pigment in the ink composition is not particularly limited and may be selected appropriately according to an intended application and, for example, the polymerizable compound, which has a low molecular weight, may be used as the dispersion medium, or a solvent may be used as the dispersion medium. However, since the ink is a radiation curing type ink composition and is cured after the ink is applied onto a recording medium, it is preferable for it not to contain the solvent and to be free from solvent. When it is free from solvent, there is no residual solvent in a cured ink image, sufficient solvent resistance is obtained, and a VOC (Volatile Organic Compound) problem due to residual solvent can be prevented. Because of this, it is preferable to use the polymerizable compound as the dispersion medium by selecting, in particular, a polymerizable compound having the lowest viscosity from the viewpoint of improving dispersion suitability and handling properties of the ink composition.

The average particle size of the pigment is not particularly limited and may be selected appropriately according to an intended application, but since the finer the particle size the better the coloring properties, it is preferably on the order of 0.01 to 0.4 µm, and more preferably 0.02 to 0.2 µm. The maximum particle size of the pigment is preferably no greater than 3 µm, and more preferably no greater than 1 µm. The particle size of the pigment may be adjusted by selection of the pigment, dispersant, and dispersion medium and setting of dispersion conditions and filtration conditions, etc., and by controlling the particle size of the pigment it is possible to suppress clogging of a head nozzle and maintain storage stability, transparency, and curing sensitivity of the ink.

The particle size of the pigment in the ink composition may be measured by a known measurement method. Specifically, it may be measured by a centrifugal sedimentation light transmission method, an X-ray transmission method, a laser diffraction/scattering method, or a dynamic light scattering method.

When the pigment is an organic pigment, the content of the pigment in the ink composition is preferably 1 to 20 mass% on a solids content basis, and more preferably 2 to 10 mass%. When the pigment is an inorganic pigment, it is preferably 1 to 30 mass% on a solids content basis, and more preferably 2 to 25 mass%.

The content of the colorant in the ink composition is appropriately selected according to the color and the intended purpose, and is preferably 0.01 to 30 mass% relative to the mass of the entire ink composition.

### <Dispersant>

The ink composition of the present invention preferably comprises a dispersant. Especially, when the pigment is used, the ink composition preferably comprises a dispersant in order to stably disperse the pigment in the ink composition. As the dispersant that can be used in the present invention, a polymeric dispersant is preferable. The 'polymeric dispersant' referred to in the present invention means a dispersant having a weight-average molecular weight of 1,000 or greater.

Examples of the polymeric dispersant include polymeric dispersants such as DISPERBYK-101, DISPERBYK-102, DISPERBYK-103, DISPERBYK-106, DISPERBYK-111, DISPERBYK-161, DISPERBYK-162, DISPERBYK-163, DISPERBYK-164, DISPERBYK-166, DISPERBYK-167, DISPERBYK-168, DISPERBYK-170, DISPERBYK-171, DISPERBYK-174, and DISPERBYK-182 (manufactured by BYK Chemie), EFKA4010, EFKA4046, EFKA4080, EFKA5010, EFKA5207, EFKA5244, EFKA6745, EFKA6750, EFKA7414, EFKA745, EFKA7462, EFKA7500, EFKA7570, EFKA7575, and EFKA7580 (manufactured by EFKA Additives), Disperse Aid 6, Disperse Aid 8, Disperse Aid 15, and Disperse Aid 9100 (manufactured by San Nopco Limited); various types of SOLSPERSE dispersants such as Solsperse 3000, 5000, 9000, 12000, 13240, 13940, 17000, 22000, 24000, 26000, 28000, 32000, 36000, 39000, 41000, and 71000 (manufactured by Noveon); Adeka Pluronic L31, F38, L42, L44, L61, L64, F68, L72, P95, F77, P84, F87, P94, L101, P103, F108, L121, and P-123 (manufactured by Adeka Corporation), lonet S-20 (manufactured by Sanyo Chemical Industries, Ltd.), and Disparlon KS-860, 873SN, and 874 (polymeric dispersant), #2150 (aliphatic poly carboxylic acid), and #7004 (polyether ester type) (manufactured by Kusumoto Chemicals, Ltd.).

The content of the dispersant in the ink composition of the present invention is appropriately selected according to the intended purpose, and is generally preferably 0.05 to 15 mass% relative to the mass of the entire ink composition.

### <Surfactant>

The ink composition of the present invention may comprise a surfactant in order to impart long-term discharge stability.

As the surfactant, those described in JP-A-62-173463 and JP-A-62-183457 can be cited. Examples thereof include anionic surfactants such as dialkylsulfosuccinic acid salts, alkylnaphthalenesulfonic acid salts, and fatty acid salts, nonionic surfactants such as polyoxyethylene alkyl ethers, polyoxyethylene alkyl allyl ethers, acetylene glycols, and polyoxyethylene/polyoxypropylene block copolymers, and cationic surfactants such as alkylamine salts and quaternary ammonium salts. A fluorine-based surfactant (e.g. an organofluoro compound) or a silicone-based surfactant (e.g. a polysiloxane compound) may be used as the above-mentioned surfactant. The organofluoro compound is preferably hydrophobic. Examples of the organofluoro compound include fluorine-based surfactants, oil-like fluorine-based compounds (e.g. fluorine oils), solid fluorine compound resins (e.g. tetrafluoroethylene resin), and those described in JP-B-57-9053 (columns 8 to 17) and JP-A-62-135826. As the polysiloxane compound, a modified polysiloxane compound in which an organic group is introduced into some methyl groups of dimethyl polysiloxane is preferable. Modification examples include polyether-modified, methylstyrene-modified, alcohol-modified, alkyl-modified, aralkyl-modified, fatty acid ester-modified, epoxy-modified, amine-modified, amino-modified, and mercapto-modified, but are not limited thereto. These methods for modification may be used in combination. Among them, polyether-modified polysiloxane compounds are preferable from the viewpoint of improvement in inkjet discharge stability. Examples of the polyether-modified polysiloxane compounds include SILWET L-7604, SILWET L-7607N, SILWET FZ-2104, and SILWET FZ-2161 (manufactured by Nippon Unicar Co., Ltd.), and BYK-306, BYK-307, BYK-331, BYK-333, BYK-347, and BYK-348 (manufactured by BYK Chemie), and KF-351A, KF-352A, KF-353, KF-354L, KF-355A, KF-615A, KF-945, KF-640, KF-642, KF-643, KF-6020, X-22-6191, X-22-4515, KF-6011, KF-6012, KF-6015, and KF-6017 (manufactured by Shin-Etsu Chemical Co., Ltd.).

Among them, a silicone-based surfactant is preferable.

The content of the surfactant in the ink composition of the present invention is appropriately selected according to the intended purpose and is generally preferably 0.0001 to 1 mass% relative to the mass of the entire ink composition. Furthermore, these surfactants may be contained singly, or in a combination of two or more types of polysiloxane compounds.

### <Solvent>

It is also effective to add a trace amount of organic solvent to the ink composition of the present invention in order to improve the adhesion to a recording medium.

Examples of the solvent include ketone-based solvents such as acetone, methyl ethyl ketone, and diethyl ketone, alcohol-based solvents such as methanol, ethanol, 2-propanol, 1-propanol, 1-butanol, and tert-butanol, chlorine-based solvents such as chloroform and methylene chloride, aromatic-based solvents such as benzene and toluene, ester-based solvents such as ethyl acetate, butyl acetate, and isopropyl acetate, ether-based solvents such as diethyl ether, tetrahydrofuran, and dioxane, and glycol ether-based solvents such as ethylene glycol monomethyl ether and ethylene glycol dimethyl ether.

In this case, it is effective if the amount thereof added is in a range that does not cause problems with the solvent resistance or the VOC, and the amount is preferably in the range of 0.1 to 5 mass% relative to the total amount of the ink composition, and more preferably 0.1 to 3 mass%.

In the colored ink composition, a solvent may be added as a dispersion medium for various components such as the colorant, or the polymerizable compound, which is a low molecular weight component, may be used as a dispersion medium without using a solvent, and since the colored ink composition of the present invention is preferably an actinic radiation curing type liquid and the colored ink composition is cured after being applied on top of a recording medium, it is preferable for it to be solvent-free. This is because, if solvent remains in the cured object formed from the cured ink composition, the solvent resistance is degraded and the VOC (Volatile Organic Compound) problem of residual solvent occurs. From this viewpoint, it is preferable to use the polymerizable compound as a dispersion medium. Among them, it is preferable to select a polymerizable compound having a low viscosity in terms of improvement of dispersion suitability and handling properties of the photocurable composition.

The ink composition of the present invention may comprise various types of additive according to the intended purpose.

For example, from the viewpoint of improving the weatherability of an image that is obtained, a UV absorber may be used. Furthermore, in order to improve the storage stability, an antioxidant may be added.

The ink composition of the present invention may comprise various types of additive other than the component mentioned above.

Moreover, it is possible to add various types of organic and metal complex antifading agents, a conductive salt such as potassium thiocyanate, lithium nitrate, ammonium thiocyanate, or dimethylamine hydrochloride for the purpose of controlling discharge physical properties, or a high molecular weight compound in order to coating physical properties.

Furthermore, various types of high molecular weight compounds may be added to the ink composition of the present invention in order to adjust coating physical properties. Examples of the high molecular weight compounds include acrylic polymers, polyvinylbutyral resins, polyurethane resins, polyamide resins, polyester resins, epoxy resins, phenolic resins, polycarbonate resins, polyvinylbutyral resins, polyvinylformal resins, shellac, vinylic resins, acrylic resins, rubber-based resins, waxes, and other natural resins. They may be used in a combination of two or more types.

In addition to the above, the composition may contain as necessary, for example, a basic compound, a leveling additive, a matting agent, a wax for adjusting coating physical properties, or a tackifier that does not inhibit polymerization in order to improve the adhesion to a polyolefin, a polyethylene terephthalate (PET), etc.

With regard to the ink composition of the present invention, when taking into consideration discharge properties from an inkjet nozzle, the viscosity of the ink composition at the discharge temperature is preferably 0.5 to 30 mPa·s, more preferably 0.5 to 20 mPa·s, and most preferably 1 to 15 mPa·s. It is preferable to adjust and determine the compositional ratio as appropriate so that the viscosity is in this range.

The viscosity of the ink composition at 25°C (room temperature) is preferably at least 1 mPa·s but no greater than 200 mPa·s, more preferably at least 2 mPa·s but no greater than 50 mPa·s, and yet more preferably at least 2.5 mPa·s but no greater than 30 mPa·s. It is possible, by setting the viscosity at room temperature at a high value, even when a porous recording medium is used, to prevent permeation of the ink composition into the recording medium, decrease uncured monomer, reduce odor, and suppress dot spreading when a fired ink droplet lands, and as a result image quality is improved. Furthermore, when the viscosity at 25°C of the ink composition is no greater than 200 mPa·s, it is easy to deliver the ink composition to an inkjet head, etc. within the equipment.

The surface tension of the ink composition of the present invention at 25°C is preferably 20 to 40 mN/m, and more preferably 23 to 35 mN/m. When recording is carried out on various types of recording medium such as polyolefin, PET, coated paper, and uncoated paper, from the viewpoint of spread and penetration, it is preferably at least 20 mN/m, and from the viewpoint of wettability it is preferably not more than 35 mN/m.

The ink composition of the present invention prepared in this way is suitably used as an inkjet recording ink. When it is used as an inkjet recording ink, recording is carried out by ejecting the ink composition onto a recording medium by means of an inkjet printer and then irradiating the ejected ink composition with actinic radiation.

Since a printed material obtained using this ink composition of the present invention has excellent strength of the image area, it can be used in various types of application other than formation of an image using the ink, such as, for example, formation of an ink receiving layer (image area) of a lithographic printing plate.

### (Inkjet recording method, inkjet recording equipment, and printed material)

The inkjet recording method of the present invention is a method involving discharging the ink composition of the present invention onto a recording medium (a support, a recording material, etc.) for inkjet recording, and irradiating the ink composition discharged onto the recording medium with actinic radiation to thus cure the inkjet ink composition and form an image.

More specifically, the inkjet recording method of the present invention preferably comprises (a¹) a step of discharging the inkjet ink composition of the present invention onto a recording medium and (b¹) a step of irradiating the discharged inkjet ink composition with actinic radiation to thus cure the inkjet ink composition.

Due to the inkjet recording method of the present invention comprising the steps (a¹) and (b¹), an image is formed by the ink composition cured above the recording medium.

Furthermore, the inkjet recording method of the present invention is preferably carried out in a multipass mode in which the steps (a¹) and (b¹) are carried out two or more times in the same area above the recording medium, that is, printing is carried out by overlaying the same area. Due to the use of the ink composition of the present invention, when printing is carried out in a multipass mode, an image having excellent surface gloss is obtained.

Moreover, the printed material of the present invention is a printed material that has been recorded by the ink composition of the present invention, and is preferably a printed material that has been recorded by the inkjet recording method of the present invention.

Furthermore, the ink composition of the present invention is suitable for use in package printing, and in particular for use in printing a package for wrapping food. In this case it is preferably an inkjet recording method comprising, in order, the steps below.
(Step a) a step of discharging the inkjet ink composition from an inkjet head and printing on a package support having a film thickness of at least 150 µm, and
(Step b) a step of irradiating the discharged inkjet ink composition with actinic radiation.

Step (a¹) and step (a) in the inkjet recording method of the present invention may employ inkjet recording equipment described in detail below.

### <Inkjet recording device>

An inkjet recording device used in the inkjet recording method of the present invention is not particularly limited, and any known inkjet recording device that can achieve an intended resolution may be used. That is, any known inkjet recording device, such as a commercial product, may be used in order to discharge an ink composition of the present invention onto a recording medium in step (a¹) and step (a) of the inkjet recording method of the present invention.

The inkjet recording device that can be used in the present invention is equipped with, for example, an ink supply system, a temperature sensor, and an actinic radiation source.

The ink supply comprises, for example, a main tank containing the ink composition of the present invention, a supply pipe, an ink composition supply tank immediately before an inkjet head, a filter, and a piezo system inkjet head. The piezo system inkjet head may be driven so as to discharge a multisize dot of preferably 1 to 100 pL, and more preferably 8 to 30 pL, at a resolution of preferably 320 x 320 to 4,000 x 4,000dpi, more preferably 400 x 400 to 1,600 x 1,600dpi, and yet more preferably 720 x 720 dpi. Here, dpi referred to in the present invention means the number of dots per 2.54 cm.

As described above, since, for the ink composition of the present invention, the temperature of the discharged ink composition is desirably constant, the inkjet recording device is preferably equipped with means for stabilizing the temperature of the ink composition. The section for which the temperature is made constant includes the whole of a piping system and all of the members from an ink tank (middle tank where it is present) to a nozzle injection face. That is, a section from an ink supply tank to an inkjet head portion can be thermally insulated and heated. A method of controlling temperature is not particularly limited, but it is preferable to provide, for example, temperature sensors at a plurality of piping locations, and control heating according to the ink flow rate and the temperature of the surroundings. The temperature sensors may be provided on the ink supply tank and in the vicinity of the inkjet head nozzle. Furthermore, the head unit that is to be heated is preferably thermally shielded or insulated so that the device main body is not influenced by the temperature of the outside air. In order to reduce the printer start-up time required for heating, or in order to reduce the thermal energy loss, it is preferable to thermally insulate the head unit from other sections and also to reduce the heat capacity of the entire heated unit.

An actinic radiation curing type ink composition such as the ink composition of the present invention generally has a viscosity that is higher than that of a water-based ink composition usually used for an inkjet recording ink composition, and variation in viscosity due to changes in temperature at the time of discharge is large. Viscosity variation in the ink composition has a large effect on changes in liquid droplet size and changes in liquid droplet discharge speed and, consequently, causes the image quality to be degraded. It is therefore necessary to maintain the ink composition discharge temperature as constant as possible. In the present invention, the control range for the temperature of the ink composition is preferably ±5°C of a set temperature, more preferably ±2°C of the set temperature, and yet more preferably ±1°C of the set temperature.

Subsequently, (b¹) step and (b) step which is described later are explained.

The ink composition discharged onto the recording medium cures upon exposure to actinic radiation. This is due to a initiating species such as a radical being generated by decomposition of the photopolymerization initiator contained in the ink composition of the present invention by irradiation with actinic radiation, the initiating species functioning so as to make a polymerization reaction of a radically polymerizable compound take place and to promote it. In this process, if a sensitizer is present together with the polymerization initiator in the ink composition, the sensitizer in the system absorbs actinic radiation, becomes excited, and promotes decomposition of the polymerization initiator by contact with the polymerization initiator, thus enabling a curing reaction with higher sensitivity to be achieved.

The actinic radiation used in this process may include α rays, γ rays, an electron beam, X rays, UV rays, visible light, and IR rays. Although it depends on the absorption characteristics of the sensitizing dye, the peak wavelength of the actinic radiation is preferably, for example, 200 to 600 nm, more preferably 300 to 450 nm, yet more preferably 320 to 420 nm, and particularly preferably UV rays having a peak wave length of 340 to 400 nm.

Moreover, the ink composition of the present invention has sufficient sensitivity even for low output actinic radiation. It is therefore desirable to cure it with an exposure area illumination intensity of preferably 10 to 4,000 mW/cm², and more preferably 20 to 2,500 mW/cm².

As an actinic radiation source, a mercury lamp, a gas/solid laser, etc. are mainly used, and for UV photocuring inkjet ink composition a mercury lamp and a metal halide lamp are widely known. However, from the viewpoint of protection of the environment, there has recently been a strong desire for mercury not to be used, and replacement by a GaN semiconductor UV light emitting device is very useful from industrial and environmental viewpoints. Furthermore, LEDs (UV-LED) and LDs (UV-LD) have small dimensions, long life, high efficiency, and low cost, and their use as a photocuring inkjet light source can be expected.

Furthermore, light-emitting diodes (LED) and laser diodes (LD) may be used as the source of actinic radiation. In particular, when a UV ray source is needed, a UV-LED or a UV-LD may be used. For example, Nichia Corporation has marketed a violet LED having a wavelength of the main emission spectrum of between 365 nm and 420 nm. Furthermore, when a shorter wavelength is needed, the example of the LED includes a LED, disclosed in US Pat. No. 6,084,250, that can emit actinic radiation whose wavelength is centered between 300 nm and 370 nm. Furthermore, another violet LED is available, and irradiation can be carried out with radiation of a different UV bandwidth. The actinic radiation source preferable in the present invention is a UV-LED, and a UV-LED having a peak wavelength at 340 to 400 nm is particularly preferable.

The maximum illumination intensity of the LED on a recording medium is preferably 10 to 2,000 mW/cm², more preferably 20 to 1,000 mW/cm², and particularly preferably 50 to 800 mW/cm².

The ink composition of the present invention is desirably exposed to such actinic radiation preferably for 0.01 to 120 sec, and more preferably 0.1 to 90 sec.

Irradiation conditions for the actinic radiation and basic irradiation methods are disclosed in JP-A-60-132767. Specifically, light sources are provided on opposite sides of a head unit comprising an ink composition discharge system, and the head unit and the light sources are made to scan by a so-called shuttle system. Irradiation with actinic radiation is carried out after a fixed period of time (preferably 0.01 to 0.5 sec, more preferably 0.01 to 0.3 sec, and particularly preferably 0.01 to 0.15 sec) has elapsed after the ink composition has landed. By controlling the time from after the ink composition has landed until before the irradiation so that it is a very short time, it is possible to prevent the ink composition that has landed on a recording medium from spreading before being cured. Furthermore, when a porous recording medium is used, since exposure can be carried out before the ink composition penetrates to a deep part where the light source cannot reach, it is possible to suppress residual unreacted monomer, which is preferable.

Moreover, curing may be completed by another light source that is not driven. International patent application WO 99/54415 discloses as an irradiation method a method employing optical fiber or a method in which a collimated light source is shone on a mirror surface provided on a side face of a head unit and a recording area is irradiated with UV rays, and such a curing method can also be applied to the inkjet recording method of the present invention.

By employing the above-mentioned inkjet recording method, it is possible to keep the diameter of landed ink composition dots constant even for various recording media having different surface wettabilities, thus improving the image quality. When obtaining a colored image, by superimposing in order from low lightness inks, it becomes easy for radiation to reach ink in a lower part, and good curing sensitivity, reduction of residual monomer, and improvement in adhesion can be expected. Although it is possible to carry out irradiation all at once after all colors are discharged, it is preferable in terms of promoting curing that exposure to light is carried out for each color.

In this way, the ink composition of the present invention cures with high sensitivity upon exposure to actinic radiation, thereby forming an image on the surface of a recording medium.

The ink composition of the present invention is preferably used as an ink set comprising a plurality of inks for inkjet recording.

The order in which colored ink compositions are discharged is not particularly limited, but it is preferable to apply to a recording medium from a colored ink composition having a high lightness; when the ink compositions of yellow, cyan, magenta, and black are used, they are preferably applied on top of the recording medium in the order yellow → cyan → magenta → black. Furthermore, when white is additionally used, they are preferably applied on top of the recording medium in the order white → yellow → cyan → magenta → black. Moreover, the present invention is not limited thereto, and an ink set comprising a total of seven colors, that is, light cyan, light magenta ink compositions and cyan, magenta, black, white, and yellow dark ink compositions may preferably be used, and in this case they are applied on top of the recording medium in the order white → light cyan → light magenta → yellow → cyan → magenta → black.

FIG. 1 is a schematic drawing of inkjet recording equipment preferably used in the present invention. A support 6 stretched between support winding rolls 5 and 5' as support transport means is transported in the direction of the arrows, and ink compositions of each color (K: black, Y: yellow, M: magenta, C: cyan, W: white) are discharged by an inkjet head unit 7 equipped with a droplet firing head for discharging ink compositions of each color.

As shown in FIG. 1, an LED light source unit 1 is surrounded by an inert gas blanket 2 and is connected to an inert gas generating device 4 via an inert gas pipeline 3. The inert gas generating device 4, which is means for making the atmosphere within the inert gas blanket 2 an oxygen-poor atmosphere, supplies an inert gas to the interior of the inert gas blanket 2 via the inert gas pipeline 3; since in the initial state the atmosphere within the inert gas blanket 2 is air, when the inert gas generating device 4 is operated, the air within the inert gas blanket 2 is replaced by the inert gas. The inert gas may employ N₂, etc. as described above.

### <Recording medium>

The recording medium to which the ink composition of the present invention can be applied is not particularly limited, and papers such as ordinary uncoated paper and coated paper, various types of non-absorbent resin material used as so-called flexible packaging, and resin films formed by molding the material into a film may be used, and examples of various types of plastic films include PET (polyethylene terephthalate) film, OPS (biaxially oriented polystyrene) film, OPP (biaxially oriented polypropylene) film, ONy (biaxially oriented nylon) film, PVC (polyvinyl chloride) film, PE (polyethylene) film, and TAC (cellulose triacetate) film. Other examples of plastic that can be used as a recording medium material include polycarbonate, acrylic resin, ABS (acrylonitrile-butadiene-styrene copolymer), polyacetal, PVA (polyvinyl alcohol), and rubber. Furthermore, metal and glass may be used as a recording medium.

Since the ink composition of the present invention comprises the specific polymerization initiator, it may be suitably used in a curable inkjet ink composition that can be cured by irradiation with actinic radiation. Furthermore, since the ink composition of the present invention can directly form a high quality image on a non-absorbing recording medium based on digital data, it is used suitably in the production of large area printed materials.

Due to the ink composition of the present invention comprising the specific polymerization initiator, it can be cured with a low exposure. It is thought that because of this it is possible to employ a system using an inexpensive light source with low exposure intensity, cut the running cost, and contribute to an improvement in printing speed by shortening the exposure time. Furthermore, due to the cure rate after exposure being high, it is possible to suppress spreading of an image, thereby enabling a vivid image to be formed.

### (Bisacylphosphine oxide compound) - not falling under the scope of the present invention

The bisacylphosphine oxide compound not falling under the scope of the present invention is a compound represented by Formula (1-1') or Formula (1-3) below. 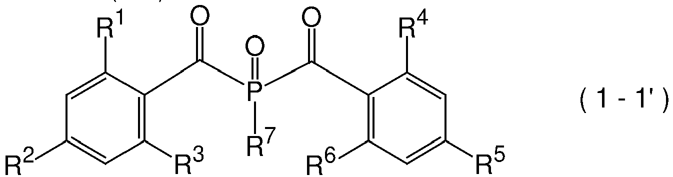 (In Formula (1-1'), R¹ to R⁶ independently denote a hydrogen atom, an alkyl group having 1 to 4 carbons, or a group represented by Formula (1-4), at least one of R¹ to R⁶ is a group represented by Formula (1-4), and R⁷ denotes an alkyl group or an aryl group.) 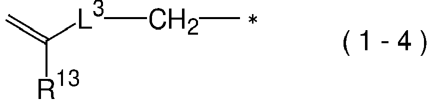 (In Formula (1-4), R¹³ denotes a hydrogen atom or a methyl group, L³ denotes -COO- or -CONH-, and -* denotes a bond to a benzene ring.) 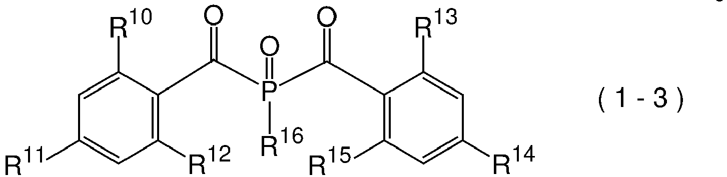 (In Formula (1-3), R¹⁰ to R¹⁵ independently denote a hydrogen atom, an alkyl group having 1 to 4 carbons, or -CH₂Br, at least one of R¹⁰ to R¹⁵ is -CH₂Br, and R¹⁶ denotes an alkyl group having 1 to 20 carbons or an aryl group having 6 to 12 carbons.)

R¹ to R⁶ in the compound represented by Formula (1-1') are independently preferably a hydrogen atom, a methyl group, or a group represented by Formula (1-4), and more preferably a methyl group or a group represented by Formula (1-4). With this, a polymer having suppressed migration in the polymer and reduced odor can be obtained.

Furthermore, the compound represented by Formula (1-1') may have only one group represented by Formula (1-4) or two or more.

R⁷ in the compound represented by Formula (1-1') is preferably an alkyl group having 1 to 12 carbons or an aryl group having 6 to 12 carbons, more preferably an aryl group having 6 to 12 carbons, and particularly preferably a phenyl group. The alkyl group and the aryl group may be substituted. Examples of the substituent include an alkyl group, an alkoxy group, an aryl group, and a halogen atom.

Moreover, when a plurality of groups represented by Formula (1-4) are present in Formula (1-1'), the groups represented by Formula (1-4) may be different from or identical to each other, but preferably are identical to each other.

R¹³ is preferably a hydrogen atom.

L³ is preferably -COO-.

R¹⁰ to R¹⁵ in Formula (1-3) are preferably independently a hydrogen atom, a methyl group, or -CH₂Br, and more preferably a methyl group or - CH₂Br.

Furthermore, in Formula (1-3), it is preferable that at least one of R¹⁰ to R¹² is -CH₂Br and at least one of R¹³ to R¹⁵ is -CH₂Br.

R¹⁶ in Formula (1-3) is an alkyl group having 1 to 20 carbons or an aryl group having 6 to 12 carbons, preferably an alkyl group having 1 to 12 carbons or an aryl group having 6 to 12 carbons, more preferably an aryl group having 6 to 12 carbons, and particularly preferably a phenyl group. The alkyl group and the aryl group may be substituted. Examples of the substituent include an alkyl group, an alkoxy group, and an aryl group.

A process for producing a compound represented by Formula (1-3) is not particularly limited; a synthetic method in which a compound for which a moiety corresponding to -CH₂Br in Formula (1-3) is -CH₃ is used, and this - CH₃ is brominated can be cited as a preferred example. Specifically, a method in which a compound for which a moiety corresponding to -CH₂Br in Formula (1-3) is -CH₃ is reacted with a thermal radical generator such as azoisobutyronitrile or benzoyl peroxide and a brominating agent such as N-bromosuccinimide can be cited as a preferred example.

A process for producing a compound represented by Formula (1-1) or a compound represented by Formula (1-1') is not particularly limited, and a known method may be employed. Among them, a method in which a compound represented by Formula (1-3) is used, and a polymerizable functional group or a group comprising a polymerizable functional group is introduced by replacing the bromine atom of -CH₂Br in Formula (1-3) therewith can be cited as a preferred example.

### (Monoacylphosphine oxide compound)

The monoacylphosphine oxide compound of the present invention is a compound represented by Formula (2-1) above or Formula (2-3) below, and is preferably a compound represented by Formula (2-1') or Formula (2-3) below. 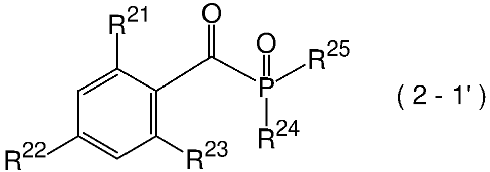 (In Formula (2-1'), R²¹ to R²³ independently denote a hydrogen atom, an alkyl group having 1 to 4 carbons, an alkoxy group having 1 to 4 carbons, or a group represented by Formula (2-4), at least one of R²¹ to R²³ is a group represented by Formula (2-4), and R²⁴ and R²⁵ independently denote an alkyl group, an aryl group, or an alkoxy group.) 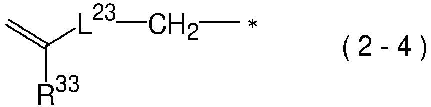 (In Formula (2-4), R³³ denotes a hydrogen atom or a methyl group, L²³ denotes -COO- or -CONH-, and -* denotes a bond to a benzene ring.) 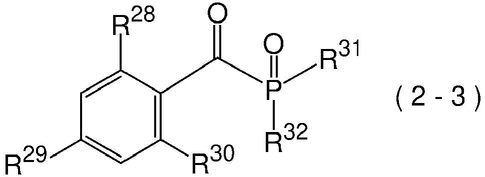 (In Formula (2-3), R²⁸ to R³⁰ independently denote a hydrogen atom, an alkyl group having 1 to 4 carbons, an alkoxy group having 1 to 4 carbons, or - CH₂Br, at least two of R²⁸ to R³⁰ are -CH₂Br, and R³¹ and R³² independently denote an alkyl group, an aryl group, or an alkoxy group.)

The compound represented by Formula (2-1) in the monoacylphosphine oxide compound of the present invention has the same meaning as that of the compound represented by Formula (2-1) described above, and preferred embodiments are also the same.

R²¹ to R²³ in Formula (2-1') are preferably independently a hydrogen atom, a methyl group, a methoxy group, or a group represented by Formula (2-4), and more preferably a methyl group, a methoxy group, or a group represented by Formula (2-4). With this embodiment, a printed material having suppressed migration of components in a film and reduced odor can be obtained.

Furthermore, in Formula (2-1') at least two of R²¹ to R²³ are preferably groups represented by Formula (2-4).

R²⁴ and R²⁵ in Formula (2-1') are preferably independently an alkyl group having 1 to 20 carbons, an aryl group having 6 to 20 carbons, or an alkoxy group having 1 to 20 carbons, more preferably an alkyl group having 1 to 12 carbons, an aryl group having 6 to 12 carbons, or an alkoxy group having 1 to 12 carbons, yet more preferably an aryl group having 6 to 12 carbons or an alkoxy group having 1 to 8 carbons, and particularly preferably a phenyl group or an alkoxy group having 1 to 4 carbons. The alkyl group, the aryl group, and the alkoxy group may be substituted. Examples of the substituent include an alkyl group, an alkoxy group, and an aryl group.

Moreover, R²⁴ and R²⁵ in Formula (2-1') are preferably independently aryl groups and more preferably phenyl groups, and R²⁴ and R²⁵ are particularly preferably both phenyl groups.

R³³ in Formula (2-4) is preferably a hydrogen atom.

L²³ in Formula (2-4) is preferably -COO-.

Furthermore, the direction of bonding of -COO- and -CONH- denoted by L²³ of Formula (2-4) may be either bonding direction, but it is preferable for the carbonyl group of -COO- or -CONH- to be bonded to the ethylenically unsaturated bond. That is, the group represented by Formula (2-4) is preferably a (meth)acryloyloxymethyl group.

R²⁸ to R³⁰ in Formula (2-3) are preferably independently a hydrogen atom, a methyl group, a methoxy group, or -CH₂Br, and more preferably a methyl group, a methoxy group, or -CH₂Br.

R³¹ and R³² in Formula (2-3) are preferably independently an alkyl group having 1 to 20 carbons, an aryl group having 6 to 20 carbons, or an alkoxy group having 1 to 20 carbons, more preferably an alkyl group having 1 to 12 carbons, an aryl group having 6 to 12 carbons, or an alkoxy group having 1 to 12 carbons, yet more preferably an aryl group having 6 to 12 carbons or an alkoxy group having 1 to 8 carbons, and particularly preferably a phenyl group or an alkoxy group having 1 to 4 carbons. The alkyl group, the aryl group, and the alkoxy group may be substituted. Examples of the substituent include an alkyl group, an alkoxy group, and an aryl group.

Furthermore, R³¹ and R³² in Formula (2-3) are preferably independently aryl groups and more preferably phenyl groups, and R³¹ and R³² are particularly preferably both phenyl groups.

A process for producing a compound represented by Formula (2-3) is not particularly limited; a synthetic method in which a compound for which a moiety corresponding to -CH₂Br in Formula (2-3) is -CH₃ is used, and this - CH₃ is brominated can be cited as a preferred example. Specifically, a method in which a compound for which a moiety corresponding to -CH₂Br in Formula (2-3) is -CH₃ is reacted with a thermal radical generator such as azoisobutyronitrile or benzoyl peroxide and a brominating agent such as N-bromosuccinimide can be cited as a preferred example.

A process for producing a compound represented by Formula (2-1) or a compound represented by Formula (2-1') is not particularly limited, and a known synthetic method may be employed. Among them, a method in which a compound represented by Formula (2-3) is used, and a polymerizable functional group, or a group comprising a polymerizable functional group, or a group formed by removing the methylene group from a group represented by Formula (2-4) is introduced by replacing the bromine atom of -CH₂Br in Formula (2-3) therewith can be cited as a preferred example.

### Examples

The present invention is explained more specifically below by reference to Examples, but the present invention should not be construed as being limited to these Examples. Unless otherwise specified, 'parts' and '%' are on a mass basis. Furthermore, A-1 to A-3, A-5, A-6, A-13, A-14, A-17, A-18, A-20, and A-22 below are the same compounds as those of the above A-1 to A-3, A-5, A-6, A-13, A-14, A-17, A-18, A-20, and A-22, and A'-1 to A'-16 below are the same compounds as those of the above A'-1 to A'-16.

### <Synthesis of A-1 >

### -Synthesis of benzyl bromide intermediate-

A 2 L three-necked flask equipped with a stirring rod, a nitrogen inlet tube, and a thermometer was charged with 12g (28.7 mmol) of bis(2,4,6-trimethylbenzoyl)phenylphosphine oxide (IRGACURE 819, Ciba Japan), 5.11 g (28.7 mmol) of *N*-bromosuccinimide, and 1,500 mL of chlorobenzene, and heated at 65°C under a flow of nitrogen for 1 hour while stirring. After the solids were completely dissolved, 0.2 g of azoisobutyronitrile was added thereto, and a reaction was carried out for a further 6 hours. After the solution was allowed to cool, a treatment using a separatory funnel with ethyl acetate and water was carried out twice and this was followed by column chromatography (hexane:ethyl acetate = 7: 3) to thus isolate a benzyl bromide intermediate of Compound A-1.

¹H NMR (400 MHz, CDCl₃)

δ = 2.04 (6H, s), 2.11 (6H, s), 2.25 (3H, s), 4.36 (2H, s), 6.78 (2H, s), 7.04 (2H, s), 7.41 to 7.48 (2H, m), 7.55 to 7.65 (1H, m), 7.74 to 7.80 (2H, m)

### -Synthesis of A-1-

12.20 g (37.44 mmol) of cesium carbonate was added to a mixed solution of dimethylformamide (DMF, 40 mL) and pure water (8 mL) and dissolved. Subsequently, the solution was concentrated by stirring under reduced pressure for 12 hours. 1.35 g (18.72 mmol) of acrylic acid was added thereto, a DMF (30 mL) solution of 9.3 g (18.72 mmol) of the benzyl bromide intermediate of A-1 was added thereto, and stirring was carried out at room temperature (25°C) for 5 hours. A treatment using a separatory funnel with ethyl acetate and water was carried out twice and this was followed by column chromatography (hexane:ethyl acetate = 8:2) to thus isolate Compound A-1.

¹H NMR (400 MHz, CDCl₃)

δ = 2.08 (6H, s), 2.11 (6H, s), 2.25 (3H, s), 5.20 (2H, s), 5.86 (1H, d), 6.20 (1H, t), 6.45 (1H, d), 6.78 (2H, s), 7.00 (2H, s), 7.41 to 7.48 (2H, m), 7.55 to 7.65 (1H, m), 7.74 to 7.80 (2H, m)

### <Synthesis of A-2, A-3, A-5, A-6, A-13, A-14, A-17, A-18, and A-22>

A-2, A-3, A-5, A-6, A-13, A-14, A-17, A-18, and A-22 were synthesized in the same manner as for the synthesis of A-1 except that the components used and the amounts added in the synthesis of A-1 were changed as shown in Table 1 or Table 2.

**(Table 1)**

| Compound | Reagent structure | | Amount of reagent used (molar equivalents) | |
|---|---|---|---|---|
| | Acylphosphine oxide compound | Benzyl bromide compound synthesized | Acylphosphine oxide compound | *N*-Bromosuccinimide |
| A-3 | 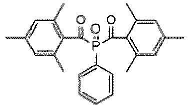 | 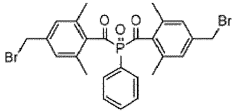 | 1 | 2 |
| A-5 | 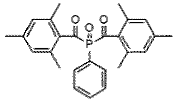 | 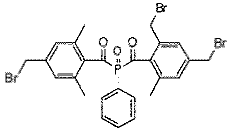 | 1 | 3 |
| A-2 | 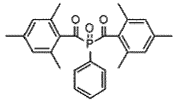 | 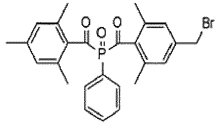 | 1 | 1 |
| A-6 | 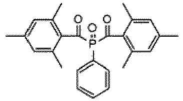 | 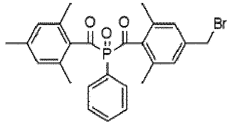 | 1 | 1 |
| A-13 | 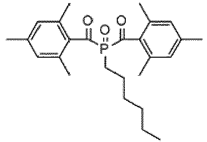 | 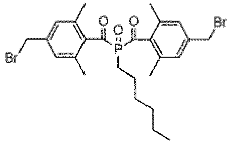 | 1 | 2 |
| A-14 | 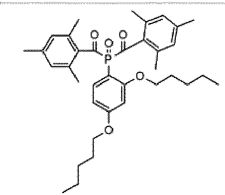 | 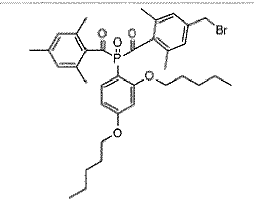 | 1 | 1 |
| A-17 | 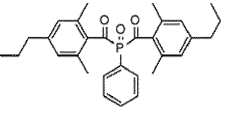 | 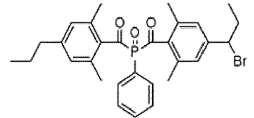 | 1 | 1 |
| A-18 | 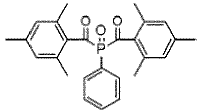 | 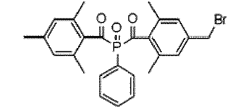 | 1 | 1 |
| A-22 | 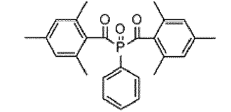 | 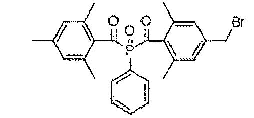 | 1 | 1 |

**(Table 2)**

| Compound | Reagent structure | | Amount of reagent used (molar equivalents) | | |
|---|---|---|---|---|---|
| | Benzyl bromide compound | Compound replacing Br | Benzyl bromide compound | Compound replacing Br | Cesium carbonate |
| A-3 | 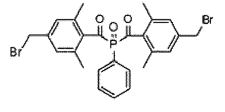 | 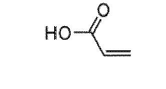 | 1 | 2 | 4 |
| A-5 | 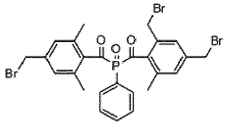 | 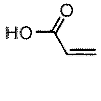 | 1 | 3 | 6 |
| A-2 | 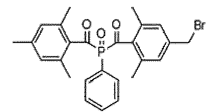 | 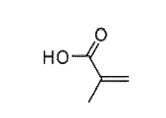 | 1 | 1 | 2 |
| A-6 | 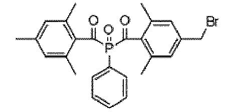 | 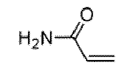 | 1 | 1 | 2 |
| A-13 | 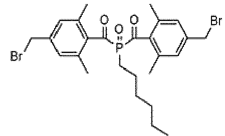 | 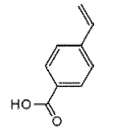 | 1 | 2 | 4 |
| A-14 | 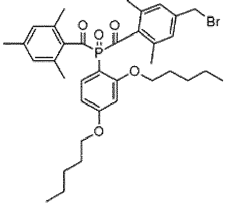 | 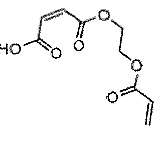 | 1 | 1 | 2 |
| A-17 | 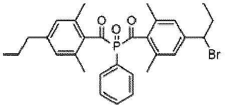 | 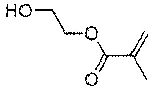 | 1 | 1 | 2 |
| A-18 | 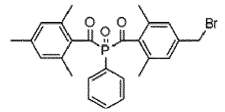 | 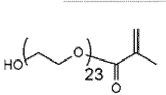 | 1 | 1 | 2 |
| A-22 | 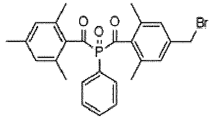 | 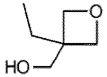 | 1 | 1 | 2 |

¹H NMR data for A-2, the benzyl bromide intermediate of A-3, A-3, the benzyl bromide intermediate of A-5, and A-5 are given below.

### <A-2>

¹H NMR (400 MHz, CDCl₃): δ = 1.96 (3H, t), 2.08 (6H, s), 2.11 (6H, s), 2.25 (3H, s), 5.19 (2H, s), 5.57 (1H, d), 6.45 (1H, d), 6.78 (2H, s), 7.00 (2H, s), 7.41 to 7.48 (2H, m), 7.55 to 7.65 (1H, m), 7.74 to 7.80 (2H, m)

### <Benzyl bromide intermediate of A-3>

¹H NMR (400 MHz, CDCl₃): δ = 2.04 (12H, s), 4.36 (4H, s), 7.02 (4H, s), 7.41 to 7.48 (2H, m), 7.55 to 7.65 (1H, m), 7.74 to 7.80 (2H, m)

### <A-3>

¹H NMR (400 MHz, CDCl₃): δ = 2.08 (12H, s), 5.20 (4H, s), 5.86 (2H, d), 6.20 (2H, t), 6.45 (2H, d), 7.00 (4H, s), 7.41 to 7.48 (2H, m), 7.55 to 7.65 (1H, m), 7.74 to 7.80 (2H, m)

### <Benzyl bromide intermediate of A-5>

¹H NMR (400 MHz, CDCl₃): δ = 2.04 (9H, s), 4.36 (6H, s), 7.02 (3H, s), 7.04 (1H, s), 7.41 to 7.48 (2H, m), 7.55 to 7.65 (1H, m), 7.74 to 7.80 (2H, m)

### <A-5>

¹H NMR (400 MHz, CDCl₃): δ = 2.08 (9H, s), 5.20 (6H, s), 5.86 (3H, d), 6.20 (3H, m), 6.45 (3H, d), 7.00 (3H, s), 7.02 (1H, s), 7.41 to 7.48 (2H, m), 7.55 to 7.65 (1H, m), 7.74 to 7.80 (2H, m)

### <Synthesis of A-20>

A 200 mL recovery flask was charged with 1.81 g (78.8 mmol) of metallic sodium and 76.6 g of dry toluene, and stirring was carried out at 98°C. 3.53 g (19.7 mmol) of p,p-dichlorophenylphosphine was added thereto dropwise over 1 hour, and stirring was carried out for a further 16 hours. Subsequently, 2.92 g (39.4 mmol) of *tert*-butanol was added thereto dropwise over 1 hour.

8.87 g (39.6 mmol) of 3-isocyanato-2,4,6-trimethylbenzoyl chloride was added dropwise to the reaction solution thus obtained at 35°C and stirring was carried out for a further 1 hour.

6.70 g (59.1 mmol) of 30% hydrogen peroxide was added dropwise to the reaction solution thus obtained and stirring was carried out for a further 1 hour. After treating with 20 g of a 5% aqueous solution of NaHCO₃, the organic layer was collected. A treatment using a separatory funnel with ethyl acetate and water was carried out twice and this was followed by column chromatography (hexane:ethyl acetate = 8:2) to thus isolate Compound A-20.

### <Inkjet recording method>

In the inkjet system shown in FIG. 1, as inkjet heads four CA3 heads manufactured by Toshiba Tec Corporation were arranged side by side for each color, the heads were heated to 45°C, and the frequency was controlled so that drawing was carried out with a fired droplet size of 42 pL. As a light source, an LED light source unit having a peak wavelength of 385 nm (LEDZero Solidcure, Integration Technology) was disposed within an inert gas blanket, as an inert gas source a Maxi-Flow30 N₂ gas generating device (Inhouse Gas) equipped with a compressor was connected at a pressure of 0.2 MPa·s, and the N₂ concentration was set by making N₂ flow at a flow rate of 2 to 10 L/min so that the N₂ concentration (N₂ partial pressure) within the blanket was in the range of 90% to 99%. As a support, Pylen Film-OTP3162 (A4 size, polypropylene sheet, film thickness 40 µm) was operated at a speed of 30 m/min, a 100% solid image was drawn, and various aspects of performance were tested as follows.

### (Preparation of mill bases)

### <Preparation of cyan mill base A >

300 parts by mass of IRGALITE BLUE GLVO (cyan pigment, BASF Japan), 620 parts by mass of SR9003 (PO-modified neopentyl glycol diacrylate, Sartomer), and 80 parts by mass of SOLSPERSE 32000 (dispersant, Noveon) were stirred and mixed, thus giving cyan mill base A. Preparation of cyan mill base A was carried out by putting it into an M50 disperser motor mill (Eiger Machinery, Inc.) and dispersing using zirconia beads having a diameter of 0.65 mm at a peripheral speed of 9 m/s for 4 hours.

### (Reference Examples 1-1 to 17 and Comparative Examples 1-1 to 5)

### <Method for preparing ink compositions>

The materials shown in Tables 3 to 5 were mixed and stirred in the amounts (parts by mass) shown therein, thus giving each of the ink compositions. Compounds B-1 and B-2 had the structures below.

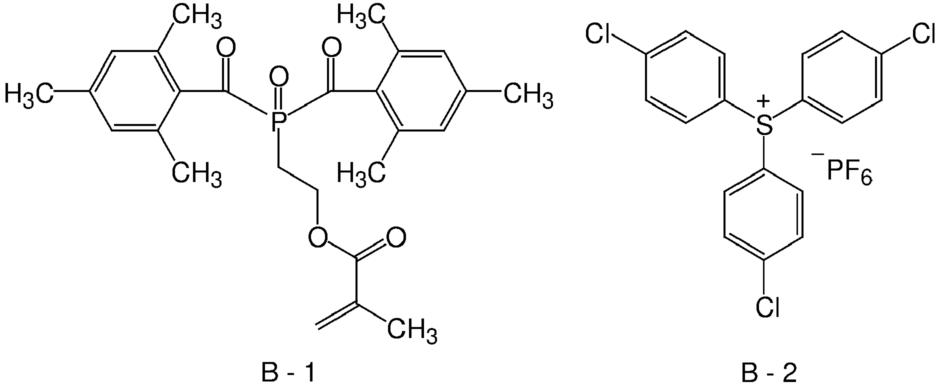

**(Table 3)**

| | | Refere nce Ex. 1-1 | Refere nce Ex. 1-2 | Refere nce Ex. 1-3 | Refere nce Ex. 1-4 | Refere nce Ex. 1-5 | Refere nce Ex. 1-6 | Refere nce Ex. 1-7 | Refere nce Ex. 1-8 | Refere nce Ex. 1-9 | Referen ce Ex. 1-11 |
|---|---|---|---|---|---|---|---|---|---|---|---|
| Colorant | Cyan mill base A | 2.4 | 2.4 | 2.4 | 2.4 | 2.4 | 2.4 | 2.4 | 2.4 | 2.4 | 2.4 |
| Polymerizable compound | TPGDA | 71.9 | 71.9 | 71.9 | 71.9 | 71.9 | 71.9 | 71.9 | 71.9 | 71.9 | 71.9 |
| | EOTMPTA | 10 | 10 | 10 | 10 | 10 | 10 | 10 | 10 | 10 | 10 |
| | NPGPODA | 3.6 | 3.6 | 3.6 | 3.6 | 3.6 | 3.6 | 3.6 | 3.6 | 3.6 | 3.6 |
| Polymerization initiator | A-1 | 7 | - | - | - | - | - | - | - | - | - |
| | A-3 | - | 7 | - | - | - | - | - | - | - | - |
| | A-5 | - | - | 7 | - | - | - | - | - | - | - |
| | A-2 | - | - | - | 7 | - | - | - | - | - | - |
| | A-6 | - | - | - | - | 7 | - | - | - | - | - |
| | A-13 | - | - | - | - | - | 7 | - | - | - | - |
| | A-14 | - | - | - | - | - | - | 7 | - | - | - |
| | A-17 | - | - | - | - | - | - | - | 7 | - | - |
| | A-18 | - | - | - | - | - | - | - | - | 7 | - |
| | A-20 | - | - | - | - | - | - | - | - | - | 7 |
| | ESACURE KIP150 | 5 | 5 | 5 | 5 | 5 | 5 | 5 | 5 | 5 | 5 |
| Surfactant | BYK307 | 0.1 | 0.1 | 0.1 | 0.1 | 0.1 | 0.1 | 0.1 | 0.1 | 0.1 | 0.1 |

**(Table 4)**

| | | Reference Ex. 1-10 |
|---|---|---|
| Colorant | Cyan mill base A | 2.4 |
| Polymerizable compound | DVE-3 | 44 |
| | OXT-221 | 37.5 |
| Polymerization initiator | A-22 | 7 |
| | Compound B-2 | 9 |
| Surfactant | BYK307 | 0.1 |

**(Table 5)**

| | | Refer ence Ex. 1-12 | Refer ence Ex. 1-13 | Refer ence Ex. 1-14 | Refer ence Ex. 1-15 | Refer ence Ex. 1-16 | Refer ence Ex. 1-17 | Comp. Ex. 1-1 | Comp. Ex. 1-2 | Comp. Ex. 1-3 | Comp. Ex. 1-4 | Comp. Ex. 1-5 |
|---|---|---|---|---|---|---|---|---|---|---|---|---|
| Colorant | Cyan mill base A | 2.4 | 2.4 | 2.4 | 2.4 | 2.4 | 2.4 | 2.4 | 2.4 | 2.4 | 2.4 | 2.4 |
| Polymerizable compound | TPGDA | - | 30 | 70.9 | 71.9 | 15 | 72 | 71.9 | 71.9 | 71.9 | 71.9 | 71.9 |
| | EOTMPTA | 16 | 13 | 10 | 10 | - | 10 | 10 | 10 | 10 | 10 | 10 |
| | NPGPODA | - | 2 | 3.6 | 3.6 | - | 3.6 | 3.6 | 3.6 | 3.6 | 3.6 | 3.6 |
| | APG-100 | 65.5 | 37.5 | - | - | - | - | - | - | - | - | - |
| | Isobornyl acrylate | - | - | - | - | 25 | - | - | - | - | - | - |
| | Phenoxyethyl acrylate | 4 | - | - | - | 45.5 | - | - | - | - | - | - |
| Polymerization initiator | A-1 | 7 | 18 | 7 | - | 7 | 7 | - | - | - | - | - |
| | A-3 | - | - | - | 0.5 | - | - | - | - | - | - | - |
| | ITX | - | - | 6 | - | - | - | - | - | 7 | - | - |
| | ESACURE KIP150 | 5 | - | - | 11.5 | 5 | 5 | 5 | 5 | 5 | 5 | 5 |
| | IRGACURE 819 | - | - | - | - | - | - | 7 | - | - | - | - |
| | Compound B-1 | - | - | - | - | - | - | - | 7 | - | - | - |
| | IRGACURE 369 | - | - | - | - | - | - | - | - | - | 7 | - |
| | IRGACURE 127 | - | - | - | - | - | - | - | - | - | - | 7 |
| Surfactant | BYK307 | 0.1 | 0.1 | 0.1 | 0.1 | 0.1 | - | 0.1 | 0.1 | 0.1 | 0.1 | 0.1 |

The abbreviations shown in Tables 3 to 5 other than those given above are as follows.

### <Polymerizable compounds (monomers)>

TPGDA: tripropylene glycol diacrylate, SR306, Sartomer
NPGPODA: PO-modified neopentyl glycol diacrylate, SR9003, Sartomer
EOTMPTA: EO-modified trimethylolpropane triacrylate, SR454, Sartomer
APG-100: dipropylene glycol diacrylate, Shin-Nakamura Chemical Co., Ltd.
Phenoxyethyl acrylate: SR339, Sartomer
DVE-3: difunctional vinyl ether compound, triethylene glycol divinyl ether, ISP Europe
OXT-221: difunctional oxetane compound, bis(3-ethyl-3-oxetanylmethyl) ether, Toagosei Co., Ltd.

### <Other polymerization initiators>

ITX: isopropylthioxanthone, SPEEDCURE ITX, LAMBSON
ESACURE KIP150: compound below, Lamberti
IRGACURE 819: bis(2,4,6-trimethylbenzoyl)phenylphosphine oxide, BASF
IRGACURE 369: 2-benzyl-2-dimethylamino-1-(4-morpholinophenyl)-1-butanone, BASF Japan
IRGACURE 127: bis(α-hydroxyketone) compound shown below, BASF

### <Surfactant>

BYK307: silicone-based surfactant, BYK Chemie 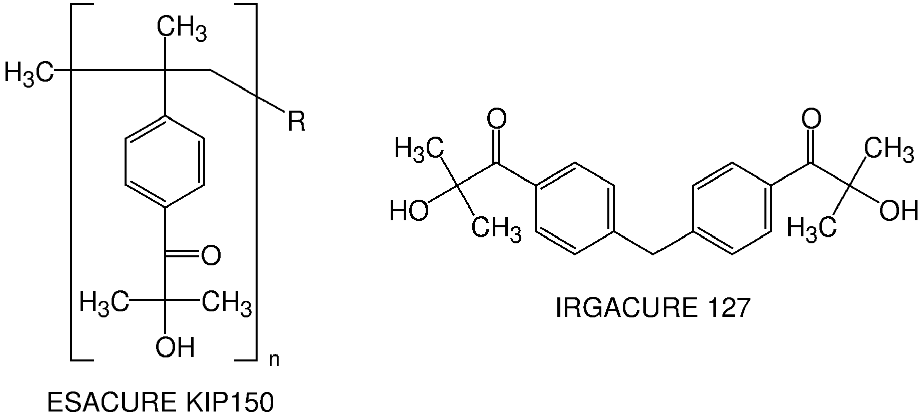 (In the Formula, n denotes an integer of 2 or greater, and R denotes a terminal group.)

### <Migration evaluation method>

10 mL of water:ethanol = 70:30 mixed liquid was added dropwise onto a printed material surface, and the printed material, cut out into a size of 10 sq dm, was placed in a hermetically sealed glass chamber so that the mixed solvent did not volatilize and allowed to stand at 40°C for 10 days. Subsequently, the total amount leached out from the printed material (overall migration amount: OML) contained in the water-ethanol mixed solvent was calculated and evaluated using levels of 1 to 5. The total amount leached out after the printed material had been allowed to stand for 10 days was measured by volatilizing the water-ethanol mixed liquid and measuring the mass of the remaining components.
5: amount leached out was no greater than 50 ppb
4: amount leached out was greater than 50 ppb but no greater than 200 ppb
3: amount leached out was greater than 200 ppb but no greater than 1,000 ppb
2: amount leached out was greater than 1,000 ppb but no greater than 2,000 ppb
1: amount leached out was greater than 2,000 ppb

### <Odor evaluation method>

An image obtained by the inkjet image recording method was placed inside a 30 cm × 30 cm zippered vinyl bag and allowed to stand for 24 hours.

Subsequently, the zip was opened, and the odor was evaluated. Measurement was carried out by 10 people, and the evaluation made by the greatest number of people was employed. When there were multiple evaluations made by the greatest number of people, the average of these evaluation values was employed.
5: substantially no odor
4: slight odor but almost unnoticeable
3: some odor but not unpleasant
2: strong odor
1: very strong odor

### <Substrate adhesion evaluation method>

In the inkjet recording method, the support was changed to Priplak (film thickness 0.8 mm, polypropylene sheet, Robert Horne), and a printed material was formed. Adhesion between a cured film and the recording medium was evaluated by a crosshatch test (EN ISO2409), and given as 5B to 1B in accordance with the ASTM method. 5B was the best in terms of adhesion, and 3B or higher were levels without problems in practice.

### <Fingernail scratch resistance evaluation method>

An image obtained was scratched with a fingernail 10 times, the image surface was examined, and the degree of scratching was evaluated using the criteria below. Evaluations of 3 or higher were levels without problems in practice.
5: when printed material was examined using a magnifying glass, no scratches at all were observed on the surface
4: when printed material was examined using a magnifying glass, slight scratches were observed, but the scratches were invisible at distance of 50 cm
3: when examined at a distance of 50 cm from printed material, slight scratches on the surface were visible, but the scratches were invisible at a distance of 1 m
2: when examined at a distance of 1 m from printed material, slight scratches on the surface were visible
1: when examined at a distance of 1 m from printed material, scratches on the surface were clearly visible

Evaluation results for Reference Examples 1-1 to 1-17 and Comparative Examples 1-1 to 5 are summarized in Table 6.

**(Table 6)**

| | Migration | Odor | Adhesion | Fingernail scratch resistance |
|---|---|---|---|---|
| Reference Ex. 1-1 | 5 | 5 | 5B | 5 |
| Reference Ex. 1-2 | 5 | 5 | 5B | 5 |
| Reference Ex. 1-3 | 5 | 5 | 5B | 5 |
| Reference Ex. 1-4 | 5 | 5 | 4B | 5 |
| Reference Ex. 1-5 | 5 | 5 | 4B | 4 |
| Reference Ex. 1-6 | 4 | 5 | 4B | 4 |
| Reference Ex. 1-7 | 4 | 4 | 4B | 4 |
| Reference Ex. 1-8 | 4 | 3 | 4B | 4 |
| Reference Ex. 1-9 | 4 | 3 | 4B | 3 |
| Reference Ex. 1-10 | 4 | 3 | 3B | 3 |
| Reference Ex. 1-11 | 3 | 3 | 3B | 3 |
| Reference Ex. 1-12 | 4 | 5 | 5B | 5 |
| Reference Ex. 1-13 | 5 | 5 | 5B | 5 |
| Reference Ex. 1-14 | 5 | 5 | 5B | 4 |
| Reference Ex. 1-15 | 5 | 5 | 5B | 3 |
| Reference Ex. 1-16 | 3 | 3 | 4B | 5 |
| Reference Ex. 1-17 | 5 | 5 | 5B | 5 |
| Comp. Ex. 1-1 | 1 | 1 | 2B | 3 |
| Comp. Ex. 1-2 | 1 | 1 | 2B | 3 |
| Comp. Ex. 1-3 | 1 | 2 | 2B | 2 |
| Comp. Ex. 1-4 | 1 | 1 | 1B | 1 |
| Comp. Ex. 1-5 | 1 | 1 | 1B | 1 |

### <Synthesis of A'-14>

### -Synthesis of benzyl bromide intermediate-

A 2 L three-necked flask equipped with a stirring rod, a nitrogen inlet tube, and a thermometer was charged with 10 g (28.7 mmol) of 2,4,6-trimethylbenzoyldiphenylphosphine oxide (LUCIRIN TPO, Ciba Japan), 5.11g (28.7 mmol) of *N*-bromosuccinimide, and 1,500 mL of chlorobenzene, and heated at 65°C under a flow of nitrogen for 1 hour while stirring. After the solids were completely dissolved, 0.2 g of azoisobutyronitrile was added thereto, and a reaction was carried out for a further 6 hours. After the solution was allowed to cool, a treatment using a separatory funnel with ethyl acetate and water was carried out twice and this was followed by column chromatography (hexane:ethyl acetate = 7: 3) to thus isolate a benzyl bromide intermediate of Compound A'-14.

¹H NMR (CDCl₃): δ = 2.04 (s, 6H), 4.38 (s, 2H), 7.03 (s, 2H), 7.50 to 7.61 (m, 6H), 7.97 to 8.02 (m, 4H)

### -Synthesis of A'-14-

12.20 g (37.44 mmol) of cesium carbonate was added to a mixed solution of dimethylformamide (DMF) (40 mL) and pure water (8 mL) and dissolved. Subsequently, the solution was concentrated by stirring under reduced pressure for 12 hours. 1.35 g (18.72 mmol) of acrylic acid was added thereto, a DMF (30 mL) solution of 8 g (18.72 mmol) of the benzyl bromide intermediate of A-14 was added thereto, and stirring was carried out at room temperature for 5 hours. A treatment using a separatory funnel with ethyl acetate and water was carried out twice and this was followed by column chromatography (hexane:ethyl acetate = 8:2) to thus isolate Compound A'-14.

¹ H NMR (400 MHz, CDCl₃): δ = 2.04 (s, 6H), 5.10 (s, 2H), 5.86 (d, 1H), 6.11 to 6.21 (m, 1H), 6.42 (d, 1H), 7.01 (s, 2H), 7.47 to 7.66 (m, 6H), 7.96 to 8.07 (m, 4H)

### <Synthesis of A'-2, A'-6, A'-7, A'-9, A'-10, A'-12, A'-13, A'-15, and A'-16>

A'-2, A'-6, A'-7, A'-9, A'-10, A'-12, A'-13, A'-15, and A'-16 were synthesized in the same manner as for the synthesis of A'-14 except that the components used and the amounts added in the Synthesis of A'-14 were changed as shown in Table 7 or Table 8. In the tables, Bu denotes an n-butyl group.

**(Table 7)**

| Compound | Reagent structure | | Amount of reagent used (molar equivalents) | |
|---|---|---|---|---|
| | Acylphosphine oxide compound | Benzyl bromide compound synthesized | Acylphosphine oxide compound | *N*-Bromosuccinimide |
| A'-14 | 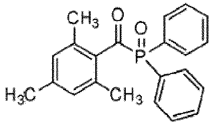 | 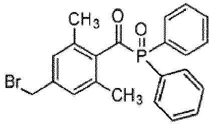 | 1 | 1 |
| A'-2 | 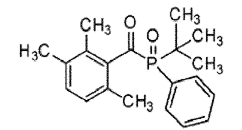 | 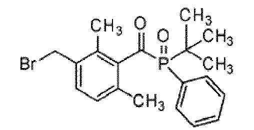 | 1 | 1 |
| A'-6 | 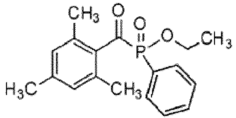 | 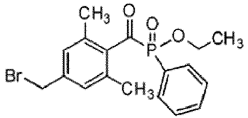 | 1 | 1 |
| A'-7 | 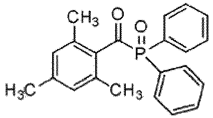 | 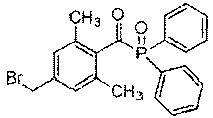 | 1 | 1 |
| A'-9 | 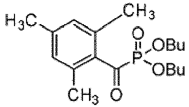 | 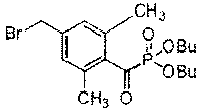 | 1 | 1 |
| A'-10 | 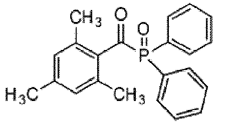 | 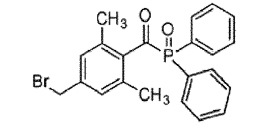 | 1 | 1 |
| A'-12 | 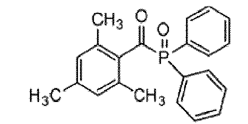 | 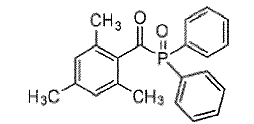 | 1 | 1 |
| A'-13 | 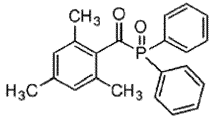 | 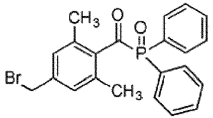 | 1 | 1 |
| A'-15 | 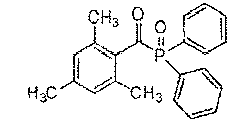 | 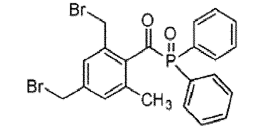 | 1 | 2 |
| A'-16 | 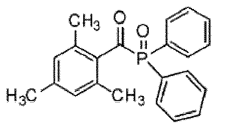 | 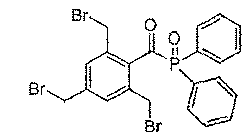 | 1 | 3 |

**(Table 8)**

| Compound | Reagent structure | | Amount of reagent used (molar equivalents) | | |
|---|---|---|---|---|---|
| | Benzyl bromide compound | Compound replacing Br | Benzyl bromide compound | Compound replacing Br | Cesium carbonate |
| A'-14 | 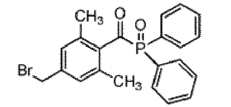 | 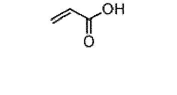 | 1 | 1 | 2 |
| A'-2 | 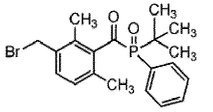 | 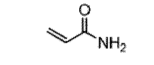 | 1 | 1 | 2 |
| A'-6 | 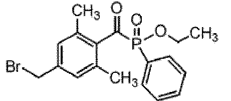 | 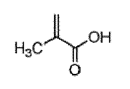 | 1 | 1 | 2 |
| A'-7 | 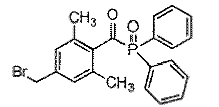 | 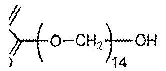 | 1 | 1 | 2 |
| A'-9 | 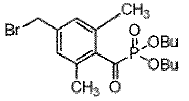 | 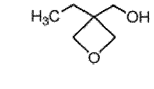 | 1 | 1 | 2 |
| A'-10 | 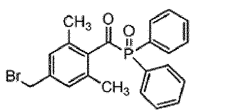 | 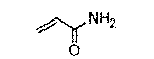 | 1 | 1 | 2 |
| A'-12 | 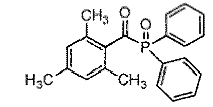 | 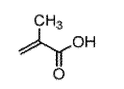 | 1 | 1 | 2 |
| A'-13 | 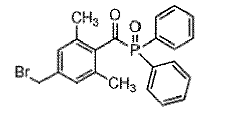 | 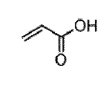 | 1 | 1 | 2 |
| A'-15 | 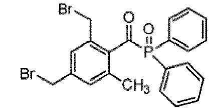 | 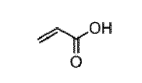 | 1 | 2 | 4 |
| A'-1 6 | 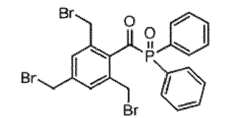 | 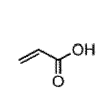 | 1 | 3 | 6 |

¹H NMR data for A'-12, the benzyl bromide intermediate of A'-15, A'-15, the benzyl bromide intermediate of A'-16, and A'-16 are shown below.

### <A'-12>

¹H NMR (400 MHz, CDCl₃): δ = 1.96 (3H, t), 2.04 (s, 6H), 5.10 (s, 2H), 5.86 (d, 1H), 6.42 (d, 1H), 7.01 (s, 2H), 7.47 to 7.66 (m, 6H), 7.96 to 8.07 (m, 4H)

### <Benzyl bromide derivative of A'-15>

¹H NMR (CDCl₃): δ = 2.04 (s, 3H), 4.38 (s, 4H), 7.03 (s, 2H), 7.50 to 7.61 (m, 6H), 7.97 to 8.02 (m, 4H)

### <A'-15>

¹H NMR (400 MHz, CDCl₃): δ = 2.04 (s, 3H), 5.24 (s, 4H), 5.86 (d, 2H), 6.11 to 6.21 (m, 2H), 6.42 (d, 2H), 7.02 (s, 2H), 7.47 to 7.66 (m, 6H), 7.96 to 8.07 (m, 4H)

### <Benzyl bromide derivative of A'-16>

¹H NMR (CDCl₃): δ = 4.38 (s, 6H), 7.05 (s, 2H), 7.50 to 7.61 (m, 6H), 7.97 to 8.02 (m, 4H)

### <A'-16>

¹H NMR (400 MHz, CDCl₃): δ = 5.26 (s, 6H), 5.86 (d, 3H), 6.11 to 6.21 (m, 3H), 6.42 (d, 3H), 7.04 (s, 2H), 7.47 to 7.66 (m, 6H), 7.96 to 8.07 (m, 4H)

### <Synthesis of A'-11>

A benzyl bromide compound was synthesized in the same manner as for A'-14. 3.0 g (6.59 mmol) of the benzyl bromide derivative, 40 mL of tetrahydrofuran (THF), and 10 mL of pure water were added to a 100 mL three-necked flask and stirring was carried out at 40°C for 6 hours. Subsequently, a treatment using a separatory funnel with ethyl acetate and water was carried out twice and this was followed by drying.

The compound thus obtained was dissolved in 30 mL of THF at room temperature, 1.02 g (6.59 mmol) of Karenz MOI (2-isocyanatoethyl methacrylate) was added dropwise over 15 minutes, and stirring was carried out at 40°C for a further 4 hours. A treatment using a separatory funnel with ethyl acetate and water was carried out twice and this was followed by column chromatography (hexane:ethyl acetate = 7: 3) to thus isolate Compound A'-11.

### <Inkjet recording method>

In the inkjet system shown in FIG. 1, as inkjet heads four CA3 heads manufactured by Toshiba Tec Corporation were arranged side by side for each color, the heads were heated to 45°C, and the frequency was controlled so that drawing was carried out with a fired droplet size of 42 pL. As a light source, an LED light source unit having a peak wavelength of 385 nm (LEDZero Solidcure, Integration Technology) was disposed within an inert gas blanket, as an inert gas source a Maxi-Flow30 N₂ gas generating device (Inhouse Gas) equipped with a compressor was connected at a pressure of 0.2 MPa·s, and the N₂ concentration was set by making N₂ flow at a flow rate of 2 to 10 L/min so that the N₂ concentration (N₂ partial pressure) within the blanket was in the range of 90% to 99%. As a support, Pylen Film-OTP3162 (A4 size, polypropylene sheet, film thickness 40 µm) was operated at a speed of 30 m/min, a 100% solid image was drawn, and various aspects of performance were tested as follows.

### (Preparation of mill bases)

### <Preparation of cyan mill base A >

300 parts by mass of IRGALITE BLUE GLVO (cyan pigment, BASF Japan), 620 parts by mass of SR9003 (PO-modified neopentyl glycol diacrylate, Sartomer), and 80 parts by mass of SOLSPERSE 32000 (dispersant, Noveon) were stirred and mixed, thus giving cyan mill base A. Preparation of cyan mill base A was carried out by putting it into an M50 disperser motor mill (Eiger Machinery, Inc.) and dispersing using zirconia beads having a diameter of 0.65 mm at a peripheral speed of 9 m/s for 4 hours.

### (Examples 2-1 to 2-8 and 2-10 to 2-17, Reference Example 2-9 and Comparative Examples 2-1 to 5)

### <Method for preparing ink compositions>

The materials shown in Tables 9 to 11 were mixed and stirred in the amounts (parts by mass) shown therein, thus giving each of the ink compositions. Compound B'-1 and Compound B'-2 had the structures below.

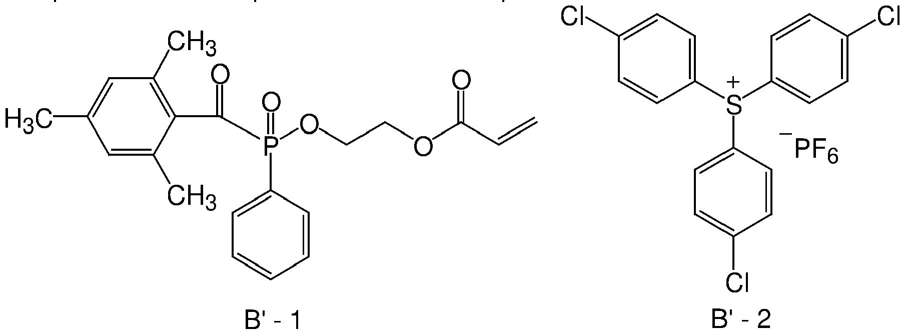

**(Table 9)**

| | | Ex. 2-1 | Ex. 2-2 | Ex. 2-3 | Ex. 2-4 | Ex. 2-5 | Ex. 2-6 | Ex. 2-7 | Ex. 2-8 | Refere nce Ex. 2-9 | Ex. 2-11 |
|---|---|---|---|---|---|---|---|---|---|---|---|
| Colorant | Cyan mill base A | 2.4 | 2.4 | 2.4 | 2.4 | 2.4 | 2.4 | 2.4 | 2.4 | 2.4 | 2.4 |
| Polymerizable compound | TPGDA | 71.9 | 71.9 | 71.9 | 71.9 | 71.9 | 71.9 | 71.9 | 71.9 | 71.9 | 71.9 |
| | EOTMPTA | 10 | 10 | 10 | 10 | 10 | 10 | 10 | 10 | 10 | 10 |
| | NPGPODA | 3.6 | 3.6 | 3.6 | 3.6 | 3.6 | 3.6 | 3.6 | 3.6 | 3.6 | 3.6 |
| Polymerization initiator | A'-14 | 7 | - | - | - | - | - | - | - | - | - |
| | A'-15 | - | 7 | - | - | - | - | - | - | - | - |
| | A'-16 | - | - | 7 | - | - | - | - | - | - | - |
| | A'-12 | - | - | - | 7 | - | - | - | - | - | - |
| | A'-10 | - | - | - | - | 7 | - | - | - | - | - |
| | A'-6 | - | - | - | - | - | 7 | - | - | - | - |
| | A'-13 | - | - | - | - | - | - | 7 | - | - | - |
| | A'-11 | - | - | - | - | - | - | - | 7 | - | - |
| | A'-7 | - | - | - | - | - | - | - | - | 7 | - |
| | A'-2 | - | - | - | - | - | - | - | - | - | 7 |
| | ESACURE KIP150 | 5 | 5 | 5 | 5 | 5 | 5 | 5 | 5 | 5 | 5 |
| Surfactant | BYK307 | 0.1 | 0.1 | 0.1 | 0.1 | 0.1 | 0.1 | 0.1 | 0.1 | 0.1 | 0.1 |

**(Table 10)**

| | | Ex. 2-10 |
|---|---|---|
| Colorant | Cyan mill base A | 2.4 |
| Polymerizable compound | DVE-3 | 44 |
| | OXT-221 | 37.5 |
| Polymerization initiator | A'-9 | 7 |
| | Compound B'-2 | 9 |
| Surfactant | BYK307 | 0.1 |

**(Table 11)**

| | | Ex. 2-12 | Ex. 2-13 | Ex. 2-14 | Ex. 2-15 | Ex. 2-16 | Ex. 2-17 | Comp. Ex. 2-1 | Comp. Ex. 2-2 | Comp. Ex. 2-3 | Comp. Ex. 2-4 | Comp. Ex. 2-5 |
|---|---|---|---|---|---|---|---|---|---|---|---|---|
| Colorant | Cyan mill base A | 2.4 | 2.4 | 2.4 | 2.4 | 2.4 | 2.4 | 2.4 | 2.4 | 2.4 | 2.4 | 2.4 |
| Polymerizable compound | TPGDA | - | 30 | 70.9 | 71.9 | 15 | 72 | 71.9 | 71.9 | 71.9 | 71.9 | 71.9 |
| | EOTMPTA | - | 13 | 10 | 10 | - | 10 | 10 | 10 | 10 | 10 | 10 |
| | NPGPODA | - | 2 | 3.6 | 3.6 | - | 3.6 | 3.6 | 3.6 | 3.6 | 3.6 | 3.6 |
| | APG-100 | 65.5 | 37.5 | - | - | - | - | - | - | - | - | - |
| | A-TMMT | 16 | - | - | - | - | - | - | - | - | - | - |
| | Isobornyl acrylate | - | - | - | - | 25 | - | - | - | - | - | - |
| | Phenoxyethyl acrylate | 4 | - | - | - | 45.5 | - | - | - | - | - | - |
| Polymerization initiator | A'-14 | 7 | 15 | 7 | - | 7 | 7 | - | - | - | - | - |
| | A'-16 | - | - | - | 0.5 | - | - | - | - | - | - | - |
| | ITX | - | - | 6 | - | - | - | - | - | 7 | - | - |
| | ESACURE KIP150 | 5 | - | - | 11.5 | 5 | 5 | 5 | 5 | 5 | 5 | 5 |
| | LICIRIN TPO | - | - | - | - | - | - | 7 | - | - | - | - |
| | Compound B'-1 | - | - | - | - | - | - | - | 7 | - | - | - |
| | IRGACURE 369 | - | - | - | - | - | - | - | - | - | - | - |
| | IRGACURE 127 | - | - | - | - | - | - | - | - | - | - | - |
| Surfactant | BYK307 | 0.1 | 0.1 | 0.1 | 0.1 | 0.1 | - | 0.1 | 0.1 | 0.1 | 0.1 | 0.1 |

The abbreviations, etc. given in Tables 9 to 11 other than those described above are as follows.

### <Polymerizable compounds (monomers)>

TPGDA: tripropylene glycol diacrylate, SR306, Sartomer
NPGPODA: PO-modified neopentyl glycol diacrylate, SR9003, Sartomer
EOTMPTA: EO-modified trimethylolpropane triacrylate, SR454, Sartomer
APG-100: dipropylene glycol diacrylate, Shin-Nakamura Chemical Co., Ltd.
A-TMMT: pentaerythritol tetraacrylate, Shin-Nakamura Chemical Co., Ltd.
Phenoxyethyl acrylate: Sartomer SR339
DVE-3: difunctional vinyl ether compound, triethylene glycol divinyl ether, ISP Europe
OXT-221: difunctional oxetane compound, bis(3-ethyl-3-oxetanylmethyl) ether, Toagosei Co., Ltd.

### <Other polymerization initiators>

ITX: isopropylthioxanthone, SPEEDCURE ITX, LAMBSON
ESACURE KIP150: compound below, Lamberti
LUCIRIN TPO: 2,4,6-trimethylbenzoyldiphenylphosphine oxide, Ciba Japan
IRGACURE 369: 2-benzyl-2-dimethylamino-1-(4-morpholinophenyl)-1-butanone, BASF Japan
IRGACURE 127: bis(α-hydroxyketone) compound shown below, BASF

### <Surfactant>

BYK307: silicone-based surfactant, BYK Chemie 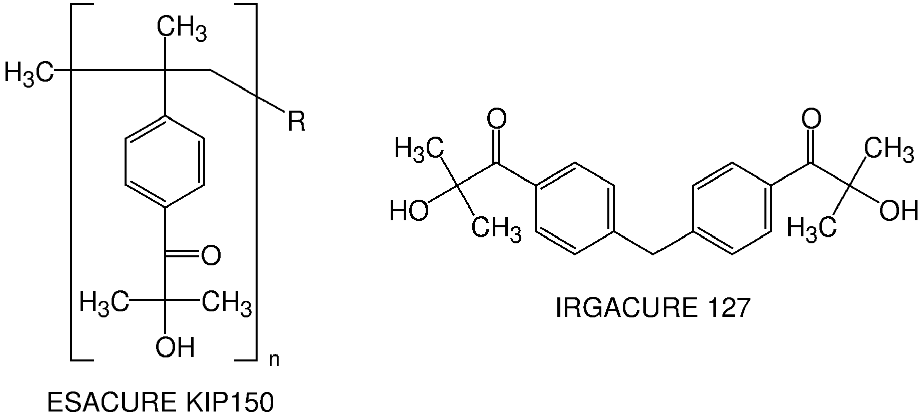 (In the Formula, n denotes an integer of 2 or greater, and R denotes a terminal group.)

### <Migration evaluation method>

10 mL of water:ethanol = 70:30 mixed liquid was added dropwise onto a printed material surface, and the printed material, cut out into a size of 10 sq dm, was placed in a hermetically sealed glass chamber so that the mixed solvent did not volatilize and allowed to stand at 40°C for 10 days. Subsequently, the total amount leached out from the printed material (overall migration amount: OML) contained in the water-ethanol mixed solvent was calculated and evaluated using levels of 1 to 5. The total amount leached out after the printed material had been allowed to stand for 10 days was measured by volatilizing the water-ethanol mixed liquid and measuring the mass of the remaining components.
5: amount leached out was no greater than 50 ppb
4: amount leached out was greater than 50 ppb but no greater than 200 ppb
3: amount leached out was greater than 200 ppb but no greater than 1,000 ppb
2: amount leached out was greater than 1,000 ppb but no greater than 2,000 ppb
1: amount leached out was greater than 2,000 ppb

### <Odor evaluation method>

An image obtained by the inkjet image recording method was placed inside a 30 cm × 30 cm zippered vinyl bag and allowed to stand for 24 hours.

Subsequently, the zip was opened, and the odor was evaluated. Measurement was carried out by 10 people, and the evaluation made by the greatest number of people was employed. When there were multiple evaluations made by the greatest number of people, the average of these evaluation values was employed.
5: substantially no odor
4: slight odor but almost unnoticeable
3: some odor but not unpleasant
2: strong odor
1: very strong odor

### <Substrate adhesion evaluation method>

In the inkjet recording method, the support was changed to Priplak (film thickness 0.8 mm, polypropylene sheet, Robert Horne), and a printed material was formed. Adhesion between a cured film and the recording medium was evaluated by a crosshatch test (EN ISO2409), and given as 5B to 1B in accordance with the ASTM method. 5B was the best in terms of adhesion, and 3B or higher were levels without problems in practice.

### <Fingernail scratch resistance evaluation method>

An image obtained was scratched with a fingernail 10 times, the image surface was examined, and the degree of scratching was evaluated using the criteria below. Evaluations of 3 or higher were levels without problems in practice.
5: when printed material was examined using a magnifying glass, no scratches at all were observed on the surface
4: when printed material was examined using a magnifying glass, slight scratches were observed, but the scratches were invisible at distance of 50 cm
3: when examined at a distance of 50 cm from printed material, slight scratches on the surface were visible, but the scratches were invisible at a distance of 1 m
2: when examined at a distance of 1 m from printed material, slight scratches on the surface were visible
1: when examined at a distance of 1 m from printed material, scratches on the surface were clearly visible

Evaluation results for Examples 2-1 to 2-8, 2-10 to 2-17, Reference Example 2-9 and Comparative Examples 2-1 to 5 are summarized in Table 12.

**(Table 12)**

| | Migration | Odor | Adhesion | Fingernail scratch resistance |
|---|---|---|---|---|
| Ex. 2-1 | 5 | 5 | 5B | 5 |
| Ex. 2-2 | 5 | 5 | 5B | 5 |
| Ex. 2-3 | 5 | 5 | 5B | 5 |
| Ex. 2-4 | 5 | 5 | 4B | 5 |
| Ex. 2-5 | 5 | 5 | 4B | 4 |
| Ex. 2-6 | 4 | 5 | 4B | 4 |
| Ex. 2-7 | 4 | 4 | 4B | 4 |
| Ex. 2-8 | 4 | 3 | 4B | 4 |
| Reference Ex. 2-9 | 4 | 3 | 4B | 3 |
| Ex. 2-10 | 4 | 3 | 3B | 3 |
| Ex. 2-11 | 3 | 3 | 3B | 3 |
| Ex. 2-12 | 4 | 5 | 5B | 5 |
| Ex. 2-13 | 5 | 5 | 5B | 5 |
| Ex. 2-14 | 5 | 5 | 5B | 4 |
| Ex. 2-15 | 5 | 5 | 5B | 3 |
| Ex. 2-16 | 3 | 3 | 4B | 5 |
| Ex. 2-17 | 5 | 5 | 5B | 5 |
| Comp. Ex. 2-1 | 1 | 1 | 2B | 3 |
| Comp. Ex. 2-2 | 1 | 1 | 2B | 3 |
| Comp. Ex. 2-3 | 1 | 2 | 2B | 2 |
| Comp. Ex. 2-4 | 1 | 1 | 1B | 1 |
| Comp. Ex. 2-5 | 1 | 1 | 1B | 1 |

## Claims

1. An ink composition comprising
an acylphosphine oxide compound having an acyl group comprising a radically polymerizable functional group, and
a radically polymerizable monomer,
wherein the acylphosphine oxide compound is an acylphosphine oxide compound represented by Formula (2-1) below, 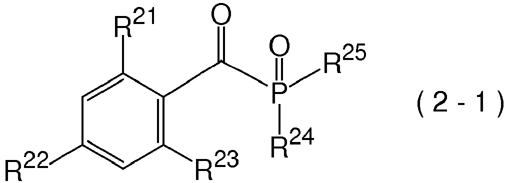 wherein in Formula (2-1), R²¹ to R²³ independently denote a hydrogen atom, an alkyl group having 1 to 4 carbons, an alkoxy group having 1 to 4 carbons, or a group comprising a radically polymerizable functional group, at least one of R²¹ to R²³ is a group represented by Formula (2-2) and R²⁴ and R²⁵ independently denote an alkyl group, an aryl group, or an alkoxy group, 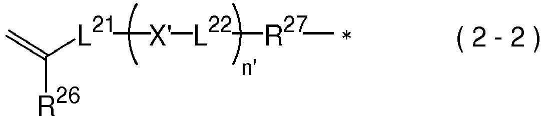 wherein in Formula (2-2), R²⁶ denotes a hydrogen atom or a methyl group, L²¹ denotes -COO-, -CONH-, or a phenylene group, X' denotes a chain-form alkylene group having 2 to 8 carbons or a divalent group formed by combining one or more chain-form alkylene group having 1 to 8 carbons and one or more ester bond, L²² denotes -COO- or -CONH-, R²⁷ denotes an alkylene group having 1 to 4 carbons, n' denotes an integer of 0 to 3, and -* denotes a bond to a benzene ring.

2. The ink composition according to Claim 1, wherein the radically polymerizable monomer comprises a difunctional radically polymerizable monomer and a trifunctional radically polymerizable monomer as a polyfunctional radically polymerizable monomer.

3. The ink composition according to Claim 1 or 2, wherein a content of the radically polymerizable monomer in the ink composition is 50 to 95 mass% relative to a total mass of the ink composition, and
a proportion of the polyfunctional radically polymerizable monomer in the radically polymerizable monomer in the ink composition is at least 80 mass% relative to a total amount of the radically polymerizable monomer.

4. The ink composition according to any one of Claims 1 to 3, wherein the ink composition is an inkjet ink composition.

5. The ink composition according to any one of Claims 1 to 4, wherein the ink composition is an ink composition for food package printing.

6. An inkjet recording method comprising
(a¹) a step of discharging the ink composition according to any one of Claims 1 to 5 onto a recording medium, and
(b¹) a step of curing the ink composition by irradiating the discharged ink composition with actinic radiation.

7. A monoacylphosphine oxide compound represented by Formula (2-3) below, 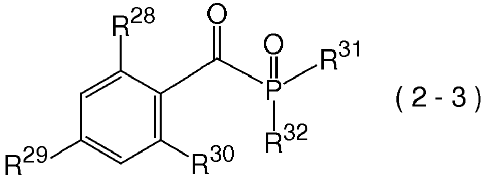 wherein in Formula (2-3), R²⁸ to R³⁰ independently denote a hydrogen atom, an alkyl group having 1 to 4 carbons, an alkoxy group having 1 to 4 carbons, or -CH₂Br, at least two of R²⁸ to R³⁰ are -CH₂Br, and R³¹ and R³² independently denote an alkyl group, an aryl group, or an alkoxy group.

8. A monoacylphosphine oxide compound represented by Formula (2-1') below, 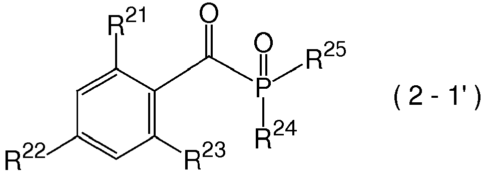 wherein in Formula (2-1'), R²¹ to R²³ independently denote a hydrogen atom, an alkyl group having 1 to 4 carbons, an alkoxy group having 1 to 4 carbons, or a group represented by Formula (2-4), at least one of R²¹ to R²³ is a group represented by Formula (2-4), and R²⁴ and R²⁵ independently denote an alkyl group, an aryl group, or an alkoxy group, 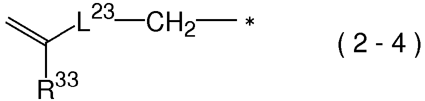 wherein in Formula (2-4), R³³ denotes a hydrogen atom or a methyl group, L²³ denotes -COO- or -CONH-, and -* denotes a bond to a benzene ring.

## Patentansprüche

1. Tintenzusammensetzung umfassend
eine Acylphosphinoxidverbindung mit einer Acylgruppe umfassend eine radikalisch polymerisierbare funktionelle Gruppe und
ein radikalisch polymerisierbares Monomer,
wobei die Acylphosphinoxidverbindung eine durch nachstehende Formel (2-1) dargestellte Acylphosphinoxidverbindung ist, 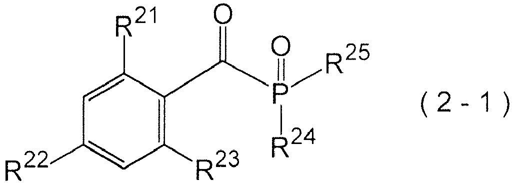 wobei in Formel (2-1), R²¹ bis R²³ unabhängig ein Wasserstoffatom, eine Alkylgruppe mit 1 bis 4 Kohlenstoffatomen, eine Alkoxygruppe mit 1 bis 4 Kohlenstoffatomen oder eine Gruppe bezeichnen, die eine radikalisch polymerisierbare funktionelle Gruppe umfasst, wobei mindestens eines aus R²¹ bis R²³ eine durch Formel (2-2) dargestellte Gruppe ist und R²⁴ und R²³ unabhängig eine Alkylgruppe, eine Arylgruppe oder eine Alkoxygruppe bezeichnen, 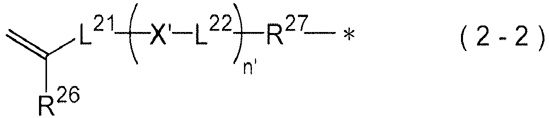 wobei in Formel (2-2), R²⁶ ein Wasserstoffatom oder eine Methylgruppe bezeichnet, L²¹ -COO-, -CONH- oder eine Phenylengruppe bezeichnet, X' eine kettenförmige Alkylengruppe mit 2 bis 8 Kohlenstoffatomen oder eine divalente Gruppe bezeichnet, gebildet durch Verbinden einer oder mehrerer kettenförmiger Alkylengruppen mit 1 bis 8 Kohlenstoffatomen und einer oder mehrerer Esterbindungen, L²² -COO- oder -CONH- bezeichnet, R²⁷ eine Alkylengruppe mit 1 bis 4 Kohlenstoffatomen bezeichnet, n' eine ganze Zahl von 0 bis 3 bezeichnet und -* eine Bindung zu einem Benzolring bezeichnet.

2. Tintenzusammensetzung nach Anspruch 1, wobei das radikalisch polymerisierbare Monomer ein difunktionales radikalisch polymerisierbares Monomer und ein trifunktionales radikalisch polymerisierbares Monomer als ein polyfunktionales radikalisch polymerisierbares Monomer umfasst.

3. Tintenzusammensetzung nach Anspruch 1 oder 2. wobei ein Gehalt an dem radikalisch polymerisierbaren Monomer in der Tintenzusammensetzung 50 bis 95 Masse%, bezogen auf die Gesamtmasse der Tintenzusammensetzung beträgt, und
ein Verhältnis des polyfunktionalen radikalisch polymerisierbaren Monomers in dem radikalisch polymerisierbaren Monomer in der Tintenzusammensetzung mindestens 80 Masse %, bezogen auf die Gesamtmenge an dem radikalisch polymerisierbaren Monomer beträgt.

4. Tintenzusammensetzung nach einem der Ansprüche 1 bis 3, wobei die Tintenzusammensetzung eine Tintenstrahltintenzusammensetzung ist.

5. Tintenzusammensetzung nach einem der Ansprüche 1 bis 4, wobei die Tintenzusammensetzung eine Tintenzusammensetzung für Nahrungsmittelverpackungsdruck ist.

6. Tintenstrahlaufzeichnungsverfahren umfassend
(a¹) einen Schritt des Ausstoßens der Tintenzusammensetzung nach einem der Ansprüche 1 bis 5 auf ein Aufzeichnungsmedium, und
(b¹) einen Schritt des Härtens der Tintenzusammensetzung durch Belichten der ausgestoßenen Tintenzusammensetzung mit aktinischer Strahlung.

7. Monoacylphosphinoxidverbindung, dargestellt durch die nachstehende Formel (2-3), 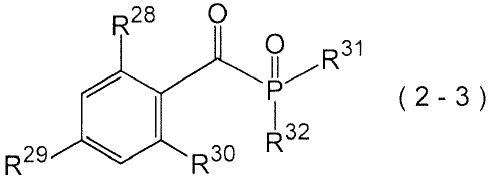 wobei in Formel (2-3), R²⁸ bis R³⁰ unabhängig ein Wasserstoffatom, eine Alkylgruppe mit 1 bis 4 Kohlenstoffatomen, eine Alkoxygruppe mit 1 bis 4 Kohlenstoffatomen oder -CH₂Br bezeichnen, wobei mindestens zwei aus R²⁸ bis R¹⁰ -CH₂Br sind und R³¹ und R³² unabhängig eine Alkylgruppe, eine Arylgruppe oder eine Alkoxygruppe bezeichnen.

8. Monoacylphosphinoxideverbindung, dargestellt durch die nachstehende Formel (2-1'), 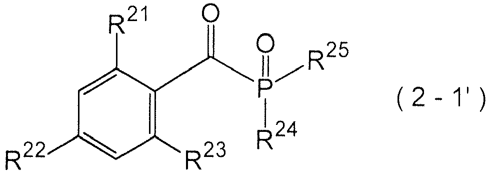 wobei in Formel (2-1'), R²¹ bis R²³ unabhängig ein Wasserstoffatom, eine Alkylgruppe mit 1 bis 4 Kohlenstoffatomen, eine Alkoxygruppe mit 1 bis 4 Kohlenstoffatomen oder eine durch Formel (2-4) dargestellte Gruppe bezeichnen, wobei mindestens eines aus R²¹ bis R²³ eine durch Formel (2-4) dargestellte Gruppe ist und R²⁴ und R²⁵ unabhängig eine Alkylgruppe, eine Arylgruppe oder eine Alkoxygruppe bezeichnen, 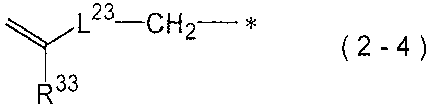 wobei in Formel (2-4), R³³ ein Wasserstoffatom oder eine Methylgruppe bezeichnet, L²³-COO- oder -CONH- bezeichnet und -* eine Bindung zu einen Benzolring bezeichnet.

## Revendications

1. Composition d'encre, comprenant :
un composé oxyde d'acylphosphine présentant un groupe acyle comprenant un groupe fonctionnel polymérisable par voie radicalaire, et
un monomère polymérisable par voie radicalaire,
dans laquelle le composé oxyde d'acylphosphine est un composé oxyde d'acylphosphine représenté par la Formule (2-1) ci-après : 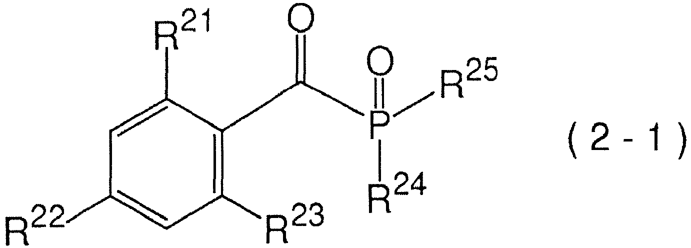 où dans la Formule (2-1), R²¹ à R²³ indiquent indépendamment un atome hydrogène, un groupe alkyle présentant de 1 à 4 atomes de carbone, un groupe alkoxy présentant de 1 à 4 atomes de carbone, ou un groupe comprenant un groupe fonctionnel polymérisable par voie radicalaire ; au moins un des R²¹ à R²³ est un groupe représenté par la Formule (2-2), et R²⁴ à R²⁵ indiquent indépendamment un groupe alkyle, un groupe aryle, ou un groupe alkoxy, 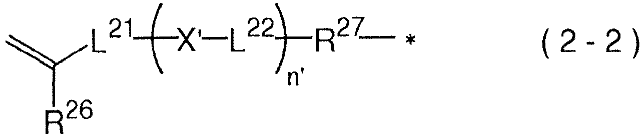 où dans la Formule (2-2), R²⁶ indique un atome hydrogène ou un groupe méthyle ; L²¹ indique -COO-, -CONH-, ou un groupe phénylène ; X' indique un groupe alkylène en forme de chaîne présentant de 2 à 8 atomes de carbone ou un groupe divalent formé en combinant un ou plusieurs groupes alkylène en forme de chaîne présentant de 1 à 8 atomes de carbone, et une ou plusieurs liaisons ester ; L²² indique -COO- ou-CONH- ; R²⁷ indique un groupe alkylène présentant de 1 à 4 atomes de carbone ; n' indique un entier allant de 0 à 3, et -* indique une liaison sur un anneau benzénique.

2. Composition d'encre selon la revendication 1, dans laquelle le monomère polymérisable par voie radicalaire comprend un monomère polymérisable par voie radicalaire bifonctionnel et un monomère polymérisable par voie radicalaire trifonctionnel sous la forme d'un monomère polymérisable par voie radicalaire polyfonctionnel.

3. Composition d'encre selon la revendication 1 ou 2, dans laquelle une teneur du monomère polymérisable par voie radicalaire dans la composition d'encre s'étend de 50 à 95 % en masse par rapport à une masse totale de la composition d'encre, et
une proportion du monomère polymérisable par voie radicalaire polyfonctionnel dans le monomère polymérisable par voie radicalaire dans la composition d'encre est au moins égale à 80 % en masse par rapport à la quantité totale du monomère polymérisable par voie radicalaire.

4. Composition d'encre selon l'une quelconque des revendications 1 à 3, dans laquelle la composition d'encre est une composition d'encre à jet d'encre.

5. Composition d'encre selon l'une quelconque des revendications 1 à 4, dans laquelle la composition d'encre est une composition d'encre pour impression d'emballages pour produits alimentaires.

6. Procédé d'enregistrement à jet d'encre, comprenant les étapes suivantes :
(a¹) une étape pour libérer la composition d'encre selon l'une quelconque des revendications 1 à 5 sur un support d'enregistrement, et
(b¹) une étape pour faire durcir la composition d'encre en irradiant la composition d'encre libérée avec un rayonnement actinique.

7. Composé oxyde d'acylphosphine représenté par la Formule (2-3) ci-après : 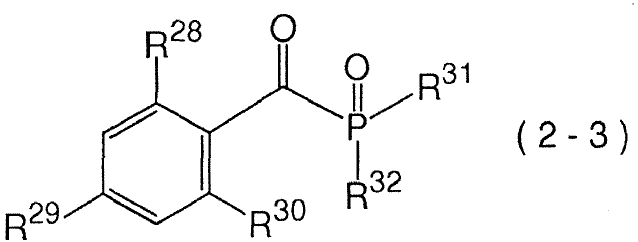 où dans la Formule (2-3), R²⁸ à R³⁰ indiquent indépendamment un atome hydrogène, un groupe alkyle présentant de 1 à 4 atomes de carbone, un groupe alkoxy présentant de 1 à 4 atomes de carbone, ou -CH₂Br ; au moins deux de R²⁸ à R³⁰ sont -CH₂Br, et R³¹ et R³² indiquent indépendamment un groupe alkyle, un groupe aryle, ou un groupe alkoxy.

8. Composé oxyde d'acylphosphine représenté par la Formule (2-1') ci-après : 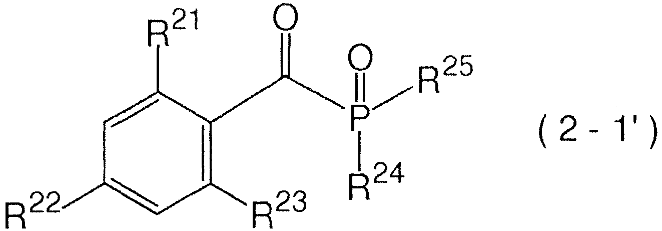 où dans la Formule (2-1'), R²¹ à R²³ indiquent indépendamment un atome hydrogène, un groupe alkyle présentant de 1 à 4 atomes de carbone, un groupe alkoxy présentant de 1 à 4 atomes de carbone, ou un groupe représenté par la Formule (2-4) ; au moins un de R²¹ à R²³ est un groupe représenté par la Formule (2-4), et R²⁴ et R²⁵ indiquent indépendamment un groupe alkyle, un groupe aryle, ou un groupe alkoxy. 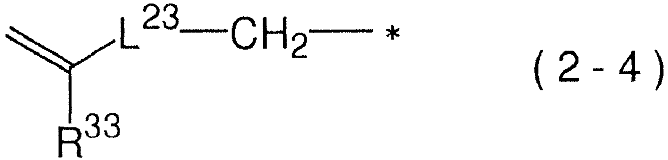 où dans la Formule (2-4), R³³ indique un atome hydrogène ou un groupe méthyle ; L²³ indique -COO- ou -CONH-, et -* indique une liaison sur un anneau benzénique.
